# EUROPEAN PATENT SPECIFICATION

(11) **EP 0 893 665 B1**
(45) Date of publication and mention of the grant of the patent: **27.11.2002**
(21) Application number: 98113583.3
(22) Date of filing: 21.07.1998
(51) Int. Cl.: F25J 1/02

(54) **Method and apparatus for regulatory control of production and temperature in a mixed refrigerant liquefied natural gas facility**
Verfahren und Vorrichtung zur Kontrollierung der Produktion und Temperatur in einer Erdgasverflüssigungsanlage mit gemischtem Kühlmittel
Procédé et dispositif pour le contrôle de la production et de la température dans une installation de liquéfaction de gaz natural avec réfrigérant mélangé

(30) Priority: 24.07.1997 US 899899
(43) Date of publication of application: 27.01.1999
(73) Proprietor: AIR PRODUCTS AND CHEMICALS, INC., Allentown, PA 18195-1501 (US)
(72) Inventor: Mandler, Jorge Anibal, Fogelsville, PA 18051 (US); Brochu, Philip A., Allentown, PA 18104 (US); Hamilton, James Robert, Jr., Macungie, PA 18062 (US)
(74) Representative: Schwabe - Sandmair - Marx

(56) References cited:
- US-A- 3 742 721
- US-A- 3 747 360
- US-A- 3 898 857
- US-A- 4 698 080
- US-A- 4 809 154
- US-A- 5 139 548

## Description

### FIELD OF THE INVENTION

This invention relates to the field of control systems for production of liquefied natural gas (LNG), and more specifically, to a method and an apparatus which control LNG production and LNG temperature.

### BACKGROUND OF THE INVENTION

Systems for the liquefaction of natural gas using a multicomponent refrigerant are in use throughout the world. Multicomponent refrigerant process and cryogenic equipment are used throughout the industry, and control of the LNG production process is important to operate a plant efficiently, especially when attempting to extract incremental production from a fixed plant or when attempting to adjust to external process disturbances. Many baseload LNG plants in the world employing a mixed refrigerant process are manually controlled or controlled to satisfy only a subset of the key control objectives.

Simultaneous and independent control of both LNG production rate and temperature is important for LNG plant operation. By fixing and maintaining the LNG production rate, plant operators can adequately plan and achieve desired production levels as required by the product shipping schedule. Maintaining the temperature of the LNG exiting the main cryogenic heat exchanger within a specified range is important for downstream processing and the prevention of downstream equipment problems. Once regulatory control is achieved for the key variables, optimization strategies can be properly implemented. However, if regulatory control is not adequate, even standard day to day operation is adversely affected.

One control system of the prior art is based on the strategy of U.S. Patent 4,809,154, entitled AUTOMATED CONTROL SYSTEM FOR A MULTICOMPONENT REFRIGERATION SYSTEM, issued February 28, 1989 to Charles Newton to control the main cryogenic heat exchanger/mixed refrigerant loop system. The recommended control strategy in U.S. Patent No. 4,809,154 has as its objective to achieve the highest production per unit of energy consumed. The refrigeration capacity is determined by setting the speed of low pressure and high pressure multicomponent, or mixed, refrigerant (MR) compressors, and by adjusting the total inventory and composition of the MR with the MR makeup valves and the high pressure separator vent and drain valves. Compressor speed, makeup valves, and vent and drain valves are adjusted by the operators as required, but they are not part of the automatic regulatory control strategy. The regulatory control strategy consists of three main feedback loops. A cold JT valve is adjusted for feedback control of the pressure ratio across the MR compressors. A warm JT valve is adjusted for feedback control of the ratio of heavy (mixed refrigerant liquid or MRL) to light (mixed refrigerant vapor or MRV) MR. Control of the LNG offtake temperature is done by means of the LNG offtake valve(s).

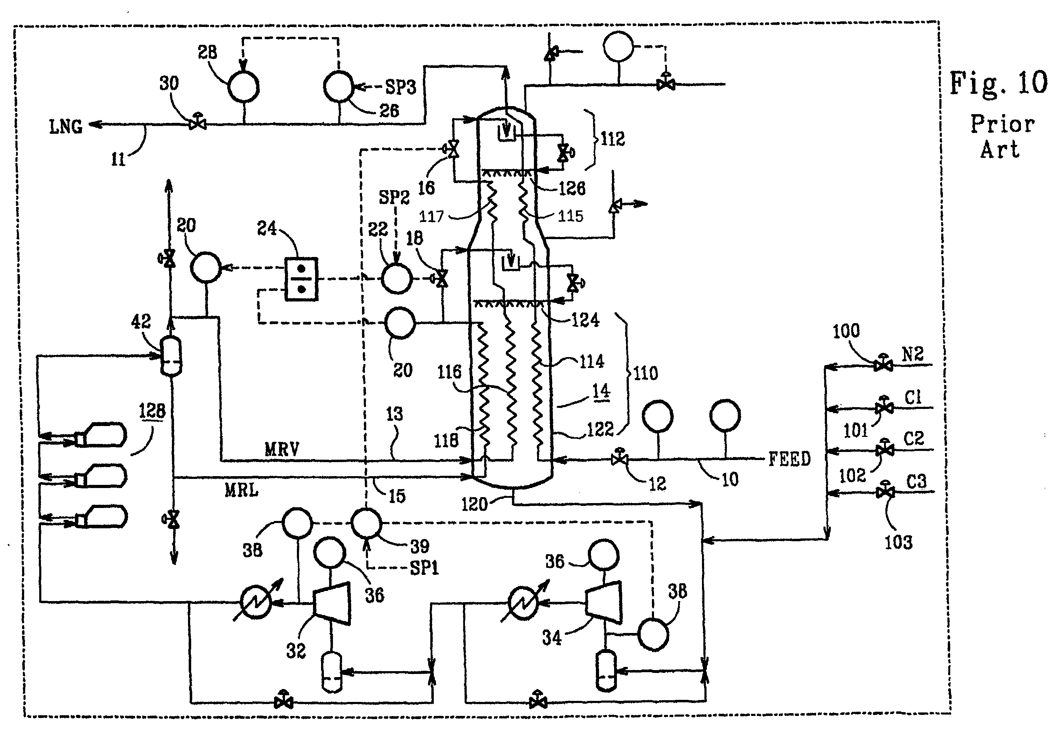

Figure 10 is a schematic flow diagram of a mixed refrigerant liquefied natural gas plant 40, and also indicates the placement of sensors, for a cascade control system of the prior art. As shown in Figure 10, the MR LNG plant 40 includes an input feed of natural gas at line 10 flowing through valve 12 to a heat exchanger 14. After cooling in heat exchanger 14, LNG is provided at line 11 as an outlet stream from Joule-Thomson (JT) LNG offtake valve 30. Natural gas is cooled in heat exchanger 14 by a heat exchange process employing a closed loop refrigeration cycle with MR. MR includes a vapor component MRV and a liquid component MRL. The process for liquefaction in an LNG plant and the elements of the LNG plant to implement this process are well known and described in detail U.S. Patent No. 3,763,658, entitled COMBINED CASCADE AND MULTICOMPONENT REFRIGERATION SYSTEM AND METHOD, issued October 9, 1973 to Lee S. Gaumer, Jr. et al..

The natural gas provided to the heat exchanger 14 through line 10 may be processed first by separation and treating processes including at least one single component refrigeration cycle before being provided to the multicomponent refrigeration portion of the liquefaction process. In this first processing, natural gas from a source may be provided at a pressure of between 28 kg/cm²a and 70 kg/cm²a, with approximately 49 kg/cm²a being a typical value. This pressure is determined by the system requirements for separation of heavy hydrocarbons, impurities, water, or other undesirable compounds. The natural gas is then cooled to a first temperature, which is typically about ambient temperature (21 degrees centigrade) by first single component heat exchange process. Upon cooling of the natural gas, a phase separator is used to remove condensed water, and then the natural gas stream is fed to one or more driers to remove additional moisture.

The dried natural gas stream is then further cooled to a temperature of approximately -1 degrees centigrade in a second heat exchange process and then supplied to scrubbers, or other similar units, to remove benzene and other heavy hydrocarbons. The natural gas stream from the scrubbers is then cooled further in a third heat exchange process to approximately -35 degrees centigrade, and is then supplied to the two zone heat exchanger 14 employing a multicomponent refrigeration cycle.

Referring to Figure 10, the liquefaction process occurs as the natural gas flows through a two zone heat exchanger 14. Natural gas from the separation and treating process enters two zone heat exchanger 14 from feed line 10 and passes upwardly through tube circuit 114 from intake valve 12 at a warm bundle 110 of the heat exchanger 14. The natural gas in tube circuit 114 is cooled by a counter flow of MR sprayed downwardly over the tube circuit by spray header 124. The natural gas flows in tube circuit 114 which is contained in warm bundle 110, which is the first zone, within heat exchanger shell 122. The natural gas feed stream passes into cold bundle 112, which is the second zone, and passes upwardly through tube circuit 115 which is cooled by a second counter flow of MR flowing from spray header 126.

The MR, which may a be mixture consisting of nitrogen, methane, ethane and propane, is employed to provide refrigeration within the shell 122 of heat exchanger 114. As is known, MR may be provided as a liquid and as a vapor within the heat exchanger 14. Heat exchange between the natural gas and the MR is efficiently done by vaporization of MR on the shell side of the heat exchange.

The multicomponent closed refrigeration cycle portion of the liquefaction process includes two compressor stages, a low pressure compressor stage 34 and a high pressure compressor stage 32. The low pressure compressor stage 34 receives the MR from the heat exchanger 14, compresses the MR and then passes the compressed MR to high pressure compressor stage 32. The low pressure compressor stage may include a heat exchange process provided by, for example, an aftercooler. The high pressure compressor stage 32 compresses and provides the MR at the desired pressure, and may also provide some local heat exchange process through an aftercooler. The compressed MR from the low pressure compressor stage 34 is typically about 3.2 kg/cm²a, and the compressed MR from the high pressure compressor stage 32 is typically about 49 kg/cm²a and provided at a temperature of approximately 77 degrees centigrade.

The compressed MR from the high pressure compressor stage 32 is passed to another heat exchange process with one or more single component, heat exchangers 128. Typically, propane is used as the single component refrigerant. The MR at 49 kg/cm²a is typically cooled to -35 degrees centigrade by the heat exchange process, but the pressure and temperature used in an LNG plant varies and is dependent upon the desired ratio of MRL to MRV for the system.

The compressed and cooled MR from the heat exchanger 128 is then provided to the separator 42, which separates the MR into the MRV flow at line 13 and MRL flow at line 15. Next, the MR must be pre-cooled to a temperature substantially below the freezing point of water, and preferably to a temperature in the order of -18 to -73 degrees centigrade. Consequently, the MRL from separator 42 on line 15 is passed through the warm bundle 110 of heat exchanger 14 to refrigerate the MRL in tube circuit 118. The flow rate of the MRL from tube circuit 118 to spray header 124 may be adjusted by Warm JT valve 18. MRV from separator 42 on line 13 is also provided to warm bundle 110 of heat exchanger 14 to refrigerate the MRV in tube circuit 116. MRV is then provided to the cold bundle 112 in tube circuit 117, and the flow rate of the MRV from tube circuit 117 to spray header 126 may be adjusted by Cold JT valve 16. Cooling of the MRV and MRL in the tube circuits is accomplished in a similar manner to that of the natural gas stream in tube circuits 114 and 115 described previously using counterflowing MR.

MRL in tube circuit 118 is subcooled in heat exchanger 14 to a temperature in the order of-112 degrees centigrade, and the subcooled MRL is expanded in Warm JT valve 18 to a pressure in the order of 3.5 kg/cm²a, whereby a portion flashes to vapor and its temperature drops to approximately -118 degrees centigrade. The liquid and flashed vapor are then injected into the warm bundle 110 through spray header 124.

MRV in tube circuit 116 is also subcooled in heat exchanger 14 where it is condensed, and then provided to second tube circuit 117 in cold bundle 112 wherein the condensed MRV is subcooled to approximately -168 degrees centigrade. This subcooled liquid fraction is expanded in Cold JT valve 16 to a pressure in the order of 3.5 kg/cm²a, whereby a portion flashes to vapor. The liquid fraction and flashed vapor are then injected into the cold bundle 112 through spray header 126.

In flowing downwardly over the tube circuits, the MR is vaporized in heat exchange with the natural gas feed stream, as well as in heat exchange with the MRL and MRV flowing upward in the heat exchanger 14. As a result, all the MRL and liquid fraction are recombined in vapor phase at the bottom of the heat exchanger 14, and the vapor is returned to the suction side of low pressure compressor stage 34. MR is returned to the compressors 32 and 34 for compression, and subsequent cooling and separation, through line 120.

The refrigeration capacity may be determined by setting the speed of the low pressure and high pressure mixed refrigerant (MR) compressor stages 34 and 32, and by adjusting the total inventory and composition of the MR with MR makeup valves 100, 101, 102 and 103; and high pressure separator vent and drain valves (not shown). Compressor speed, makeup valve positions, and vent and drain valves are adjusted by the operators as required.

There are three feedback loops of the prior art.

The first feedback loop of the prior art controls LNG offtake temperature by cascade control employing a Temperature Indicator Controller (TIC) 26 and Flow Indicator Controller (FIC) 28. The temperature of the LNG output stream from the heat exchanger 14 is measured and compared to a setpoint value SP1 by TIC 26 to provide a desired flow control signal to adjust present temperature to desired temperature. FIC 28 measures the present LNG flow and compares this to the desired flow signal from TIC 26, and adjusts the LNG offtake valve(s) 30 accordingly.

In the second feedback loop, the Warm JT valve 18 is adjusted for feedback control of the ratio of heavy (mixed refrigerant liquid or MRL) to light (mixed refrigerant vapor or MRV) MR. The Warm JT valve 18 is adjusted by a Flow Ratio Controller (FRC) 22 which compares the MR flow ratio of MRL to MRV (as measured by Flow Indicators 20), and the MRL/MRV ratio calculated by divider 24 to a setpoint value (SP2) determined offline.

In the third feedback loop, the Cold JT valve 16 is adjusted for feedback control of the pressure ratio across the MR compressor stages 32 and 34 by a Compression Ratio Controller (CRC) 39. CRC 39 produces the feedback signal using a setpoint value SP3 also determined offline, and the compressor pressures are read by Pressure Indicators (PIs) 38.

By changing the position of LNG offtake valve 30 to regulate the LNG temperature, the LNG product flow is directly affected, and therefore independent regulation of both flow and temperature at their desired setpoints is not possible with this scheme. The LNG production is left to "float" and the desired production rate is attained in an indirect fashion. Changing the flow ratio control signal of FRC 22 or compression ratio control signal of CRC 39 by changing setpoints SP2, SP3, or by operators changing the compressor speed, MR composition, or inventory sets refrigeration capacity. In order to maintain production temperature within a desired range, the TIC 26 lets the LNG production float to match the refrigeration provided.

Recent attempts to improve the control of the baseload LNG process have maintained the control strategy of U.S. Patent 4,809,154 as the underlying scheme. U.S. Patent 5,139,548, for example, discloses a feedforward control scheme to adjust for ambient air temperature changes, that is superimposed on the old scheme.

An apparatus according to the preamble of claim 27 is, for example, known from U.S. Patent 3,742,721.

### BRIEF SUMMARY OF THE INVENTION

In accordance with the invention there is provided a method comprising the features of claim 1 and an apparatus comprising the features of claim 27.

In this way, there is maintained the flow rate of the LNG outlet stream at a predetermined flow value and the temperature at a predetermined temperature value.

A further embodiment includes varying a value associated with a compressor providing the refrigeration to adjust the temperature value of the LNG outlet stream.

Another embodiment includes varying a value of mixed refrigerant (MR) providing the refrigeration to adjust the temperature value of the LNG outlet stream.

### BRIEF DESCRIPTION OF THE SEVERAL VIEWS OF THE DRAWINGS

These and other advantages of the present invention will become apparent from the following detailed description, taken in conjunction with the accompanying drawings, wherein:
Figure 1 is a schematic flow diagram of a typical mixed refrigerant liquefied natural gas plant process of an exemplary embodiment of the present invention.
Figure 2 is a high level block diagram illustrating the basic feedback control for the exemplary speed control-based embodiment of the present invention.
Figure 3 is a schematic flow diagram of a typical mixed refrigerant liquefied natural gas plant indicating the placement of sensors for a speed-based control system as illustrated in Figure 2.
Figure 4 is a high level block diagram illustrating the basic feedback control for the exemplary recirculation-based embodiment of the present invention.
Figure 5 is a schematic flow diagram of a typical mixed refrigerant liquefied natural gas plant indicating the placement of sensors for a recirculation-based control system as illustrated in Figure 4.
Figure 6A is a graph illustrating control of LNG flow rate versus time for a 4% step reduction in LNG flow setpoint scenario.
Figure 6B is a graph illustrating control of LNG temperature versus time for a 4% step reduction in LNG flow setpoint scenario.
Figure 6C is a graph illustrating control of compressor speed versus time for a 4% step reduction in LNG flow setpoint scenario.
Figure 6D is a graph illustrating control action by warm JT valve position versus time for a 4% step reduction in LNG flow setpoint scenario.
Figure 7A is a graph illustrating control of LNG flow rate versus time for a 4% step increase in LNG flow setpoint scenario.
Figure 7B is a graph illustrating control of LNG temperature versus time for a 4% step increase in LNG flow setpoint scenario.
Figure 7C is a graph illustrating control action by warm JT valve position and cold JT position versus time for a 4% step increase in LNG flow setpoint scenario.
Figure 7D is a graph illustrating shell temperature of a heat exchanger versus time for a 4% step increase in LNG flow setpoint scenario.
Figure 7E is a graph illustrating control of compressor speed versus time for a 4% step increase in LNG flow setpoint scenario.
Figure 8A is a graph illustrating control of LNG flow rate versus time for a 35% ramp reduction, at 1% per minute, in LNG flow setpoint scenario.
Figure 8B is a graph illustrating control of LNG temperature versus time for a 35% ramp reduction, at 1% per minute, in LNG flow setpoint scenario.
Figure 8C is a graph illustrating control of low pressure and high pressure compressor speeds versus time for a 35% ramp reduction, at 1% per minute, in LNG flow setpoint scenario.
Figure 8D is a graph illustrating control action by warm JT valve position versus time for a 35% ramp reduction, at 1% per minute, in LNG flow setpoint scenario.
Figure 9A is a graph illustrating control of LNG flow rate versus time for a servo change and disturbance rejection to maintain setpoints scenario.
Figure 9B is a graph illustrating control of LNG temperature versus time for a servo change and disturbance rejection to maintain setpoints scenario.
Figure 10 is a schematic flow diagram of a typical mixed refrigerant liquefied natural gas plant indicating the placement of sensors for a cascade control system of the prior art.

### DETAILED DESCRIPTION OF THE INVENTION

### Process Overview

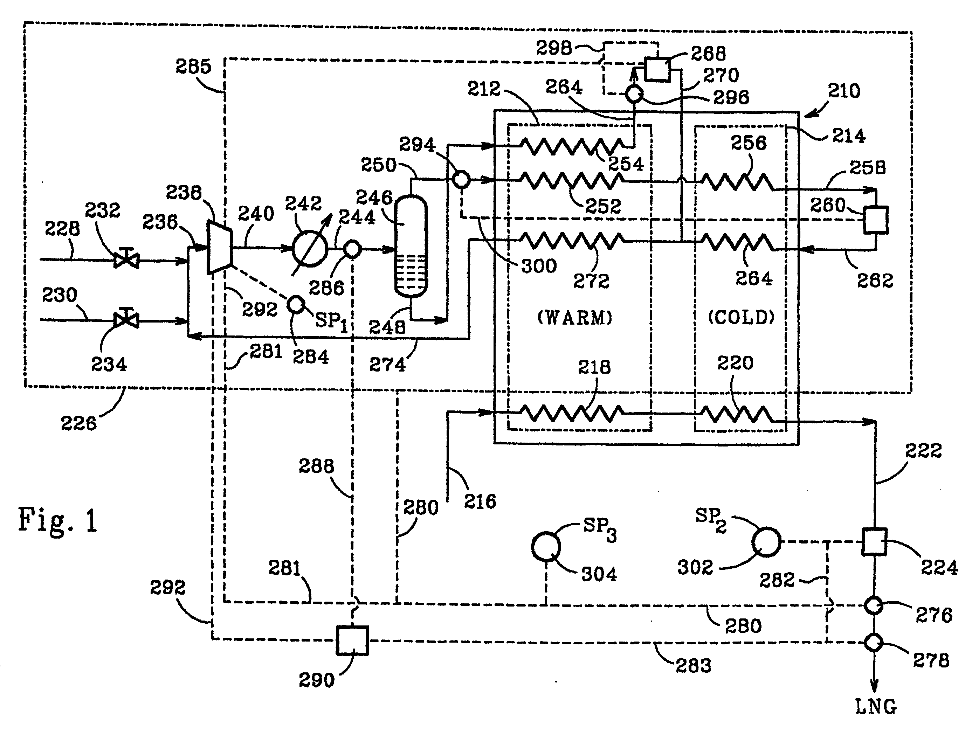

In Figure 1 there is shown a two zone heat exchanger 210 comprising a warm zone 212 and a cold zone 214, each of which is outlined by dashed lines in Figure 1. The heat exchanger can be any of the types well known in the art which permit of indirect heat exchange between two fluid streams. Such heat exchangers can be plate and fin heat exchangers, tube and shell heat exchangers, including coil wound tube heat exchangers, or any other similar devices permitting indirect heat exchange between fluids, such as a natural gas stream and a refrigerant stream. The flow of natural gas through the heat exchanger can be upwardly, downwardly or even horizontally. Thus, while the flow through heat exchanger 210 is illustrated in Figure 1 as being horizontal, this should not be taken as a process limitation, since the flow could be vertical and either upward or downward, generally dependent upon the particular type heat exchanger selected.

In the scheme of Figure 1, natural gas is introduced into heat exchanger 210 via natural gas inlet line 216 and the natural gas passes through the warm zone 212 via heat exchange path 218 and thence through the cold zone 214 via heat exchange path 220 and, finally, liquefied natural gas (LNG) is removed from heat exchanger 210 via LNG outlet line 222, which contains a flow control or pressure reduction device 224. This flow control or pressure reduction device can be any device suitable for controlling flow and/or reducing pressure in the line and can be, for instance, in the form of a turbo expander, a J-T valve or a combination of both, such as, for example, a J-T valve and a turbo expander in parallel, which provides the capability of using either or both the J-T valve and the turbo expander simultaneously.

Also shown in Figure 1 is a closed loop refrigeration cycle 226, which is also outlined by dashed lines. As illustrated in Figure 1, basically this closed loop refrigeration cycle comprises refrigerant component inlet lines 228 and 230 to introduce into the refrigeration loop different components of a multi-component or mixed refrigerant. While in Figure 1 only two separate refrigerant component inlet lines are shown, it will be understood by those skilled in the art that, in practice, the multi-component or mixed refrigerant can be comprised of three, four or even five different components, but that for purposes of illustration in the present figure, only two are shown. Refrigerant component inlet lines 228 and 230 each contain valves 232 and 234, respectively, to control the amount of individual components being introduced into the refrigeration loop. The multi-component or mixed refrigerant is introduced via mixed refrigerant (MR) inlet line 236 to compressor 238. The compressed MR from compressor 238 is passed by means of line 240 into cooler 242 wherein the compressed MR is cooled sufficiently to effect at least partial condensation thereof. Cooler 242 can be any of the types well known in the art and the compressed MR gas can be cooled against various materials including water, refrigerated water and other hydrocarbons such as heavier hydrocarbons including, for example, propane. While single compression and cooling stages (238 and 242) have been shown, it will be understood by those skilled in the art that multiple compression stages with interstage cooling can readily be employed in this situation. For ease of illustration, only single compression and cooling stages have been shown.

The partially condensed MR is passed via line 244 into separator 246 wherein it is separated into liquid and vapor phases. The liquid phase of the MR (MRL) is withdrawn from separator 246 by means of line 248 and is introduced into the warm zone 212 of heat exchanger 210. The vapor phase of the MR (MRV) is removed from separator 246 by means of line 250 and is also introduced into the warm zone 212 of heat exchanger 210. As illustrated in this Figure, the MRV flows through warm zone 212 via heat exchange path 252 cocurrent to the flow of natural gas in heat exchange path 218, also in the warm zone 212. It will be understood, of course, that it is also possible for the flow to be countercurrent in other conformations of a heat exchanger. Similarly, the MRL flows through heat exchange path 254 in the warm zone 212, also cocurrent to the flow of natural gas through heat exchange path 218 in the warm zone of heat exchanger 210. The MRV continues to flow through heat exchanger path 256 in the cold end 214 of heat exchanger 210 cocurrent to the flow of natural gas through heat exchanger path 220 in the cold zone 214 of heat exchanger 210.

The MRV is then withdrawn from heat exchanger 210 by means of line 258 and is passed through flow control or pressure reduction device 260 wherein the pressure of the mixed refrigerant of line 258 is reduced resulting in a reduction in temperature of the MRV. Again, device 260 can be any device suitable for controlling flow and/or reducing pressure in the line and can be, for instance, in the form of a turbo expander, a J-T valve or a combination of both, such as, for example, a J-T valve and a turbo expander in parallel, which provides the capability of using either or both the J-T valve and the turbo expander simultaneously. The reduced temperature MRV, after leaving device 260 is now reintroduced into heat exchanger 210 via line 262 and is passed through heat exchange path 264 in the cold end 214 of heat exchanger 210. The flow through heat exchange path 264 is countercurrent to the flow of mixed refrigerant vapor in heat exchange path 256 and natural gas flow in heat exchange path 220.

After having passed through heat exchange path 254 in the warm end 212 of heat exchanger 210, the MRL is withdrawn from heat exchanger 210 by means of line 264 and passed to flow control/pressure reduction device 268 wherein the pressure of the mixed refrigerant liquid is reduced thereby effecting a reduction in temperature of this material. As mentioned above, device 268 can be any device suitable for controlling flow and/or reducing pressure in the line and can be, for instance, in the form of a turbo expander, a J-T valve or a combination of both, such as, for example, a J-T valve and a turbo expander in parallel, which provides the capability of using either or both the J-T valve and the turbo expander simultaneously. The reduced temperature MRL, after leaving device 268, is then reintroduced into heat exchanger 210 by means of line 270 and is combined with the MRV stream leaving heat exchange path 264 and the combined streams from line 270 and heat exchange path 264 are passed through heat exchange path 272 which is in indirect heat exchange relationship with heat exchange paths 218, 252, and 254 in the warm zone 212 of heat exchanger 210 and the combined streams flow through the warm zone 212 in countercurrent flow relative to the flow of natural gas through heat exchange path 218 and the flow of MR through heat exchange paths 252 and 254. Typically, the combined mixed refrigerant stream passing through heat exchange path 272 is totally vaporized by the time it reaches the end of heat exchange path 272 and the vaporized mixed refrigerant is removed from heat exchanger 210 by means of line 274 and recycled to compressor 238 within the closed loop refrigeration cycle 226.

Similarly, heat exchange paths 220, 256 and 264 in the cold zone of heat exchanger 210 are also in indirect heat exchange relationship which each other.

Also shown in Figure 1 is a temperature sensing device 276 associated with line 222 to measure the temperature of the liquefied natural gas stream flowing in line 222. Similarly, there is associated with line 222 a flow sensing device 278 to measure the flow of liquefied natural gas in line 222. The temperature sensing device 276 generates a signal responsive to the temperature of the LNG in line 222 which is used to control the closed loop refrigeration cycle 226 as indicated by dotted line 280 extending from temperature sensing device 276 to the dashed line about closed loop refrigeration cycle 226. The flow sensing device 278 also generates a signal responsive to the flow of LNG in line 222 and this signal is passed to flow control device 224 as indicated by line 282. Generally, in this manner through the measurement of the temperature and flow rate in the LNG outlet stream, the refrigeration of the natural gas can be controlled to adjust the temperature of the LNG outlet stream, while the flow rate of the LNG outlet stream is independently controlled thereby maintaining the flow rate and temperature of the LNG outlet stream at desired levels.

In a more specific illustration of this invention, the signal of line 280 is shown to be transmitted to compressor 238, as indicated by the extension of dotted line 280 and indicated by reference numeral 281, in order to vary a value associated with the compressor providing the refrigeration and thereby adjusting the temperature value of the LNG outlet stream of line 222. More specifically, in such a configuration where the compressor 238 adjusts the flow and pressure of the refrigerant in closed loop refrigeration cycle 226, the compressor value which is varied can be any one or more of compressor speed, guidevane angle or stator blade position, which function(s) to adjust the temperature value to the LNG outlet stream of line 222.

Additionally, a predetermined target value based on the constraints defining one of the operating ranges of compressor 238 can be established as indicated by set point 1 device 284 associated with compressor 238 and this particular compressor value can be adjusted to the corresponding set point. Based upon the adjustment to the selected value of compressor 238, a value associated with the recirculation of refrigerant in closed loop cycle 226, for example, the flow control or pressure reduction device 268, can be varied. This is indicated by dotted line 285 coming from compressor 238 to flow control/pressure reduction device 268.

Further, the flow rate of the refrigerant within the closed loop refrigeration cycle 226 can be measured, for example by utilizing a flow sensing device 286 to measure the flow of refrigerant in line 244 to generate a signal responsive to the refrigerant flow rate and feeding this signal as indicated by dotted line 288 to ratio calculator 290. A signal representing the flow rate of LNG in line 222 is also fed to ratio calculator 290 by means of the extension *of* line 282, as indicated by dotted line 283. The ratio so formed is adjusted so as to control the operation of the closed loop refrigeration cycle to adjust the temperature value of the LNG outlet stream in line 222. The ratio signal from the device is indicated as line 292 running from ratio calculator 290 to closed loop refrigeration cycle 226.

More particularly, when, as shown in Figure 1, the refrigerant within the closed loop refrigerant cycle 226 is partially condensed to form a refrigerant liquid and a refrigerant vapor, the flow rate of the refrigerant vapor is measured by a flow sensing device 294 associated with line 250, while the flow rate of the liquid refrigerant stream is measured by flow sensing device 296 associated with line 264. In an operation such as this, a signal representative of the flow rate of the liquid refrigerant is generated by flow sensing device 296 and is transmitted to flow control device 268 as indicated by dotted line 298. Similarly, a signal representative of the vapor refrigerant flow rate generated by flow sensing device 294 is transmitted to flow control device 260 as indicated by dotted line 300. In this way, the flow of the liquid refrigerant can be adjusted to control the ratio of the flow of liquid refrigerant to the flow of vapor refrigerant. Simultaneously, the flow of the vapor refrigerant can be adjusted to control the total flow of refrigerant. Through such an operation, the adjustment of the vapor refrigerant flow results in an adjustment of the overall ratio of refrigerant to LNG flow rate. When mechanical restraints are reached in the control of the liquid and vapor refrigerant flow, a value of the compressor 238 in closed loop refrigeration cycle 226 is varied further to adjust the temperature value of the LNG outlet stream. This is indicated in Figure 1 by the extension of line 292 coming from ratio calculator 290 to compressor 238.

In a preferred mode of operation, the signal generated by flow sensing device 278 and transmitted to flow control/pressure reduction device 224, as indicated by line 282, can be compared to a predetermined value as indicated by set point 2 device 302 and the flow rate in line 222 can be adjusted by means of device 224 in order to make it conform to the predetermined value shown in set point 2 device 302. Similarly, the signal representative of the temperature of the LNG in line 222 is generated by temperature sensing device 276 can also be compared to a predetermined value as indicated by set point 3 device 304 associated with line 280. This can be utilized to adjust the refrigeration provided by closed loop refrigerant cycle 226 or in a particularly embodiment to control one of the variables of compressor 238 thereby to control the temperature of the outlet stream in line 222.

Consequently, in the present invention, LNG temperature is controlled by adjusting the refrigeration, while LNG production is controlled independently. The LNG production is set in a direct fashion, and the refrigeration is adjusted to match the refrigeration requirements at a given LNG temperature and production. This is an opposite approach to that of the prior art. The steps comprise: (a) measuring a temperature and flow rate of the LNG outlet stream at line 11; and (b) varying the refrigeration of the natural gas by vaporization of MR, to adjust the temperature value of the LNG outlet stream at line 11, and (c) adjusting, by LNG offtake valve 30, the rate of the LNG flowing through the liquefaction process from the cold bundle 112 of the heat exchanger 14, thereby, in this way, there is maintained the flow rate and temperature of the LNG outlet stream at predetermined flow value and temperature value setpoints.

In this process, the exemplary embodiments of the present invention include a control system which sets and maintains LNG production at a required production value, and controls LNG temperature by adjusting the refrigeration provided to the natural gas stream (thereby matching the refrigeration to the required production, as opposed to matching the production to the available refrigeration as done in the prior art).

An exemplary first embodiment of the present invention includes varying a value associated with each compressor 32 and 34 compressing the MR received from the warm bundle 110 in line 120 of the heat exchanger 14, to adjust the temperature value of the LNG outlet stream at line 11.

The embodiment may employ compressor speed of compressors 32 and 34, for example, as a key manipulated variable (MV) to achieve fast and stable LNG temperature regulation. Other compressor variables rather than speed may be key MVs, depending on the type of MR compressors employed, and may be the guidevane angle in a centrifugal compressor or the stator blade angle in an axial compressor.

A further exemplary embodiment includes varying a mixed refrigerant (MR) value, such as a flow, composition or pressure of the MRV and/or MRL, flowing from headers 124 and 126, to adjust the temperature value of the LNG outlet stream at line 11. The second exemplary embodiment employs a ratio of total recirculating refrigerant flow to LNG flow as the key manipulated variable to effectively control the LNG temperature.

Although the described embodiments of the liquefaction process include aspects of the coil wound implementation of a two zone heat exchanger in which the natural gas feed stream is passed from the bottom to the top of the heat exchanger unit, the described embodiments are equally applicable to other types of heat exchangers, such as plate fin heat exchangers mentioned previously. For example, the structure and use of the plate fin heat exchanger is described in "Use of plate fin heat exchangers for main cryogenic exchanger units," by M. Onaka, K. Asada, and K. Mitsuhashi, LNG Journal, pp17-19, January-February, 1997.

### Compressor Speed-Based Control System

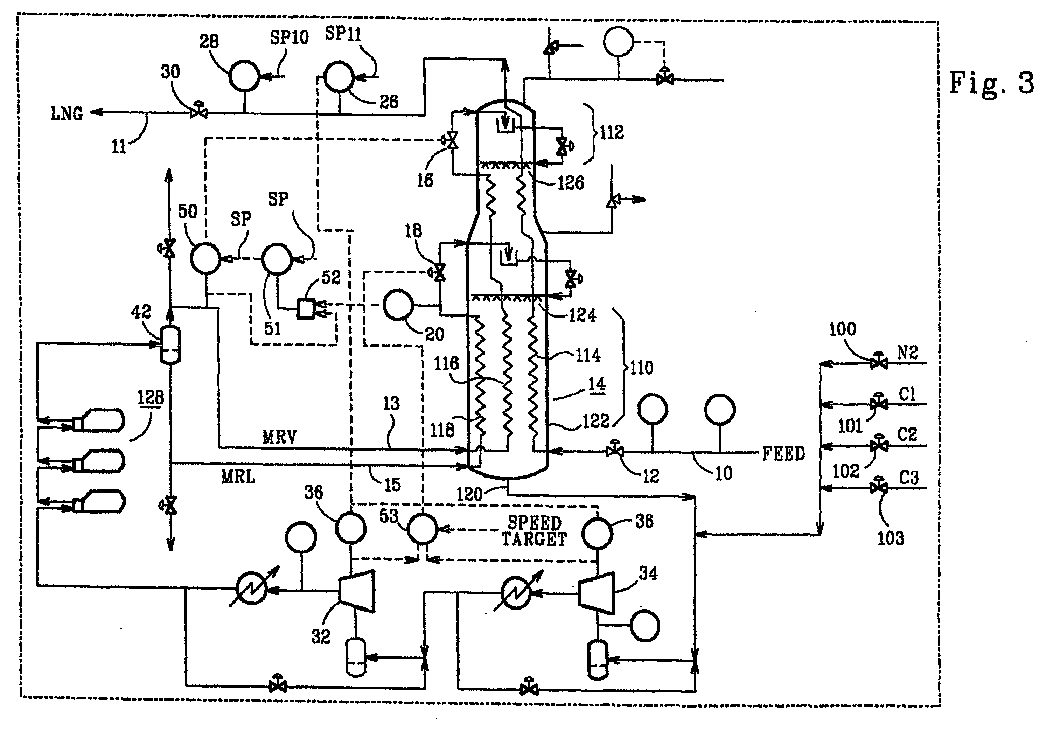

The first exemplary embodiment of the present invention used in an LNG plant 40A, shown in Figure 3, employs a control system based on feedback control of LNG flow rate, and independent feedback control of the temperature of the LNG production by adjusting compressor speed, and additionally adjusting mixed refrigerant flow to return the compressor speed to a value within a desired operating range.

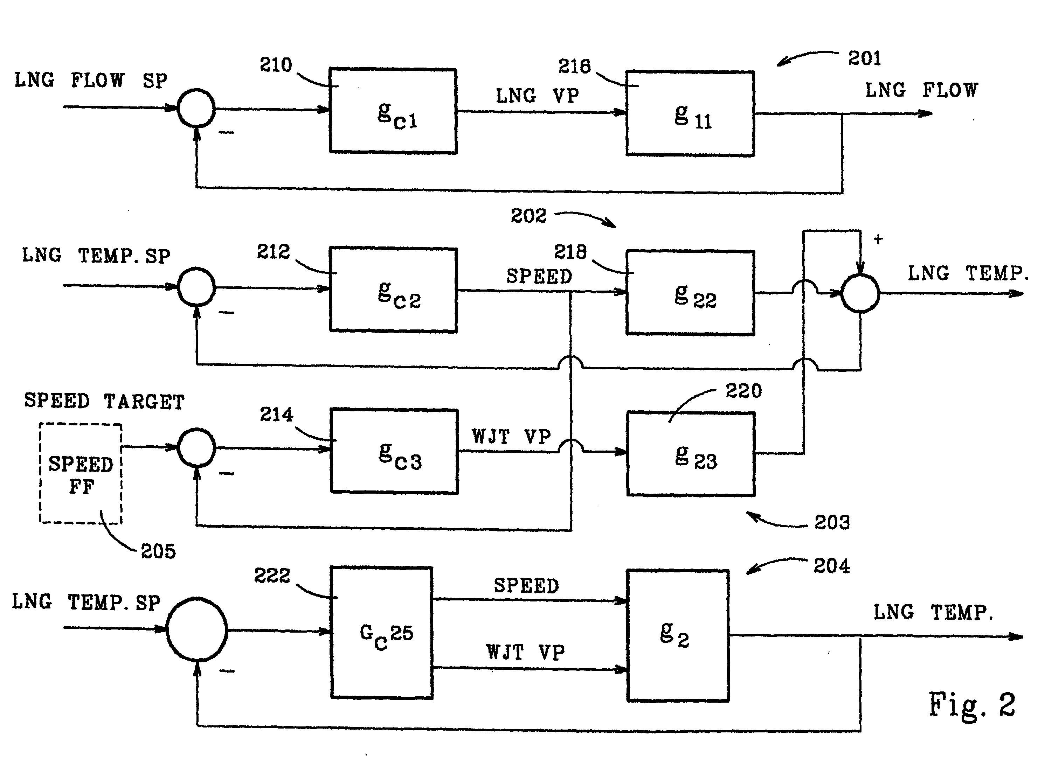

Figure 2 is a high level block diagram illustrating the basic feedback control scheme for the exemplary speed control-based embodiment of the present invention. As shown in Figure 2, three feedback loops are provided: a first feedback loop 201 controls the flow rate of LNG through a first manipulated variable (MV), such as LNG offtake valve position; a second feedback loop 202 controls the temperature of the LNG production using a compressor value, such as speed, as a second MV; and a third feedback loop 203 also affects temperature of the LNG by controlling a flow of refrigerant through the system using a third MV such as Warm or Cold JT valve position. Adjustment of this third MV may also be used to maintain the compressor value within a desired operating range by adjusting the refrigeration of the closed loop refrigeration cycle to move LNG temperature in the same direction as that accomplished by compressor value adjustment.

Adjustment of the compressor value has the following effect on the process. By increasing compressor speed, or equivalent compressor value, a decrease in the pressure of the refrigerant at the inlet of the compressor and in line 120 (of Figure 1) occurs. Consequently, the pressure, and, therefore, the temperature, at the shell side of the heat exchanger decreases, causing an increase in heat transfer, and therefore, in the refrigeration, provided to the natural gas flowing in the heat exchanger 14. A decrease in speed has an opposite effect.

In the control system of the exemplary embodiment of the present invention, there are two control objectives, and, therefore, two key control loops: a first loop controls the LNG flow rate about a setpoint value, and a second loop independently controls the LNG temperature about a setpoint value. The second control loop involves two MVs: a compressor MV, such as speed or equivalent compressor value, with a fast temperature response (which is desirable), but with a relatively weak steady-state gain (not as desirable); and a second MV, such as Warm JT valve position, with a relatively stronger steady-state gain (which is desirable) but with a slower temperature response (not as desirable). The use of two MVs for the second control objective improves controllability of the process by using the best features of each MV to compensate for the weaknesses of each MV.

In the first feedback control loop 201, LNG flow is controlled in order to change and maintain the LNG outlet stream (LNG production) to a desired LNG flow rate. This adjustment may be accomplished by, for example, adjusting the position of the LNG offtake valve 30 (Figure 3). The first feedback loop includes an LNG flow setpoint value which is determined offline or online, and may be determined, for example, from a production schedule for the particular plant.

As is known in the art, the dynamics of any process such as the LNG plant process may be modeled by transfer functions. Plant process 216 models a dynamic response of LNG flow rate to changes in the LNG offtake valve position through process transfer function g11. A flow rate controller 210 adjusts LNG flow rate based upon an error signal indicating a variation of the LNG flow rate with respect to a setpoint value. Flow rate controller 210 offsets these variations in LNG flow rate with respect to the setpoint value by control transfer function g_{C1} derived from the plant process transfer function g₁₁.

The error signal is a combination based upon the difference between the actual value of the variable controlled and a setpoint value, which for feedback loop 201 is actual measured LNG flow rate and the desired LNG flow rate setpoint. The error signal may be discrete or continuous, and the form of the error signal is dependent upon the type of controller used. For purposes of the following described embodiments, the adjustment of an MV based upon the error signal corresponding to the variations of the controlled variable about a setpoint is referred to as feedback control.

For example, a simple controller which may be implemented is the Proportional Integral Derivative (PID) controller. For a PID controller, the error signal may be the combination of the difference (e(t)), an integrated difference and a derivative of the difference between the setpoint and measured value. The PID controller output signal y_{PID}(t) to adjust the MV is given by equation (1), where K is a proportional gain, and F, 1/τᵢ and τ_{d} are constants:

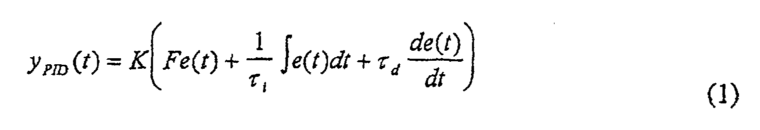

In another example, the controller may be more complex, such as an internal model controller (IMC). For the IMC, the output signal y_{IMC}(t₀) to adjust the MV is a more general function of the present and past values of the error signal and is given in general form by equation (2) using discrete sample notation:

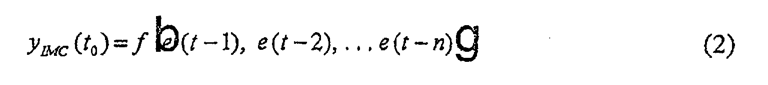

Techniques to derive the function g_{C1} from the plant transfer function g₁₁ are well known in the art. One such technique, commonly known as a model based control method, is described, for example, in chapter 3 and chapter 6 of Robust Process Control, by Manfred Morari and Evanghelos Zafiriou (Prentice Hall, 1989). However, the embodiments of the present invention are not limited to this method and other control theory techniques may be used to determine control transfer functions from the process transfer functions.

As example, the method of determining the system process transfer functions g₁₁, g₂₂, g₂₃, and hence the control transfer functions g_{C1}, g_{C2}, and g_{C3}, is as follows:

First, using a known set of typical initial conditions for all system parameters, subject the open loop system (i.e. the LNG liquefaction process with no control loop) to a step test by applying a step function for the variable under study, letting the system run to a steady-state, and collecting data for all system parameters. In this step, the system may be the plant itself in operation, or a full non-linear dynamic simulation of the plant. For example, if one wishes to find the LNG flow rate transfer function g₁₁, the process would be subjected to a step function increase in LNG offtake valve position and resulting LNG flow rate changes recorded.

Second, using a particular system identification software package, collected data from a step test are provided to a system modeling program which creates linear models for the process transfer functions (i.e. g₁₁, g₂₂, g₂₃), which may be in the form of a Laplace Transform for a continuous system or a Z-transform in the discrete domain.

Next, using the linear models of process transfer functions, find the approximate inverse functions (C1, C2, C3) of each of the system transfer functions (i.e. g₁₁, g₂₂ and g₂₃), and then use model based control methods to derive the controller transfer functions (i.e. g_{C1}, g_{C2}, and g_{C3}).

Finally, tuning constants for the controller model transfer functions may be adjusted based upon dynamic non-linear system simulation. Such simulation subjects the running closed loop control system to a wide variety of operating conditions, while comparing the operation of simulated parameters with known operation of the parameters in the LNG plant.

Returning to Figure 2, second feedback loop 202 includes an LNG temperature setpoint value which is determined offline, and is a function of process requirements. Consequently, the second feedback loop 202 is used to maintain the LNG outlet stream at or near a desired production temperature value. For this second feedback loop, this may be accomplished by, for example, adjusting compressor speed to control LNG outlet stream temperature. Other compressor values relating to a compressor's capacity, such as guidevane angle of a mixed refrigerant centrifugal compressor or stator blade position of a mixed refrigerant axial compressor, may be used as the MV of the compressor.

As described previously, the dynamics of the LNG plant process may be modeled by a process transfer function, and the plant process 218 models the dynamic process of LNG temperature to changes in refrigeration provided by changes in compressor value through process transfer function g₂₂. A Compressor Controller 212 adjusts LNG temperature using feedback control by adjusting a compressor value, such as speed, based upon an error signal derived from the difference between the LNG temperature setpoint and the actual measured LNG outlet stream temperature. The Compressor Controller 212 offsets variations in LNG temperature by control transfer function g_{C2} derived from the process transfer function g₂₂.

The third feedback loop 203 of Figure 2 includes a compressor setpoint value of speed or equivalent value which is determined offline and is related to a value within the desired operating range of the compressor, and may also be determined, for example, from compressor characteristics based on efficiency. In Figure 2, the third feedback loop is a special form of cascade control known as input resetting, which takes advantage of the availability of an extra MV, such as the position of the Warm JT valve in the exemplary embodiment, to control a single objective, such as the LNG temperature. The techniques of input resetting are known in the art and described, for example, at page 416 in Multivariable Feedback Control, Analysis and Design, by Sigurd Skogestad and Ian Postlethwaithe (J. Wiley and Sons, 1996). For this loop, as shown in Figure 2, the controller 214 offsets variations in LNG temperature by control transfer function g_{C3} derived from the process transfer function g₂₃.

Moving Warm JT valve 18 causes a refrigeration adjustment that has an effect on LNG temperature in the same direction as the compressor speed. This third feedback loop 203 operates in tandem with the second feedback loop 202, and allows the compressor speed to return to its original target value.

In an alternative embodiment of the present invention, a single, multivariable controller may be used to implement feedback control of LNG temperature. Multivariable feedback loop 204 receives an error signal as a combination of the measured LNG temperature and the LNG temperature setpoint value. Plant process transfer function g₂ models the response of the LNG temperature to simultaneous changes in compressor speed and Warm JT valve position. Multivariable controller 222 then simultaneously adjusts compressor speed and Warm JT valve position by control transfer function G_{C}25 to move the LNG temperature toward the desired setpoint value.

Figure 3 is a schematic flow diagram of a typical mixed refrigerant liquefied natural gas plant indicating the placement of sensors and controllers for a speed-based control system implementing the control system as illustrated in Figure 2. As shown the first feedback loop 201 of Figure 2 is implemented by the Flow Indicator Controller (FIC) 28, which corresponds to the Flow Rate Controller 210 of Figure 2, and LNG offtake valve 30. FIC 28 measures the LNG outlet stream flow rate, and receives the LNG flow setpoint SP10. Based on an error signal from a difference of the measured outlet stream flow and setpoint SP10, the position of the LNG offtake valve 30 is opened or closed to maintain the LNG outlet stream at the desired flow rate.

The second feedback loop 202 of Figure 2 is implemented by the Temperature Indicator Controller (TIC) 26 and compressor speed controllers 36, which together correspond to the Compressor Controller 212 of Figure 2. TIC 26 measures the actual LNG outlet stream temperature and receives the LNG temperature setpoint SP11. Based on an error signal being a combination of the measured outlet stream temperature and the setpoint SP11, the TIC 26 provides a signal to compressor signal controllers 36 which adjust the compressor speed. As previously indicated, rather than compressor speed, the centrifugal compressor's guidevane angle or axial compressors stator blade position would be changed in other implementations.

The controllers such as the FIC 28 and the TIC 26 are readily available and may be implemented as PID controllers These controllers require the user to provide the controller gains, as well as tuning parameters, as given by equation (1). This information may be determined using model based controller design techniques described previously.

Returning to Figure 3, the third feedback loop is implemented by the speed indicator controller (SIC) 53, corresponding to the controller 214 of Figure 2, and Warm JT valve 18.

The SIC 53 adjusts the refrigeration in the following manner for a system using compressor speed as the compressor value. First, the SIC 53 receives the compressor speed signal (which gives the current compressor speed) from the compressor speed controllers 36 and the speed target value (which may be calculated off-line or may be determined from the optimal speed for the current refrigerant mass flow for the closed loop refrigeration cycle), and then SIC 53 calculates a control signal based on an error signal which is a combination of the actual compressor speed and the desired speed target value. Consequently, the SIC 53 adjusts the position of Warm JT valve 18 in response to the control signal to return the compressor speed to the desired speed target value.

The control method as shown in Figure 2, as described previously, accomplishes two control objectives. The second control objective is implemented as two parts which both control temperature of the LNG outlet stream. The use of two MVs to control LNG temperature helps controllability and in addition allows operation of the LNG control system within constraints imposed by the particular implementation of the LNG plant.

In Figure 2, one may use only feedback loops 201 and 202 to maintain LNG production while independently maintaining LNG temperature. However, because of the limited range in which the compressor value of the feedback loop 202, such as speed, may be moved, and the low steady-state gain associated with the loop, the extra MV is beneficial. This is to prevent the compressor from being operated at a speed outside of the preferred operating range of the compressor. For example, operating at too a high speed may be very efficient but may damage the compressor components, but operating at too low a speed may cause compressor surge, where mass flows through the compressor reverse. Consequently, one embodiment of the present invention may include the above described third feedback loop, shown as 203 of Figure 2, to adjust refrigeration provided to the natural gas flowing through the heat exchanger system by adjusting the position of the Warm JT valve 18 to assist the compressor speed in its task. In a situation where the Warm JT valve 18 reaches an upper constraint, for example, further adjustments, including adjustment of LNG flow rate and LNG temperature set points, may be used to return operation of the compressors and position of Warm JT valves 18 to within a desired range.

The setpoint value for the temperature is determined from the desired operating characteristics of the plant. For example, in an LNG plant such as is shown in Figure 2 employing a flash cycle process, if LNG production reaches a temperature warmer than about -146 degrees centigrade, the LNG production will contain an LNG vapor component which must be flared off by equipment downstream of the heat exchanger, resulting in an unnecessary loss of natural gas. However, if the LNG production reaches a temperature colder than about -151 degrees centigrade, the LNG production will not contain enough vapor component for fueling compressors downstream of the heat exchanger. Such downstream compressors use the natural gas of vapor component as a fuel source to power the compressors, and the operating characteristics of the downstream compressors will determine the low end operating temperature. Therefore, desired operating temperature setpoint of LNG production may be selected within this temperature range.

For a sub-cooled process, no vapor is required in the LNG outlet stream, and the desired temperature setpoint is determined by the characteristics of the downstream storage tank (if temperature is too warm, LNG vapor flashing occurs, but if the temperature is too cold, the liquefaction process is inefficient).

In the present embodiment, once the Warm JT valve 18 is adjusted, a further control loop can be used to adjust a position of the Cold JT valve 16 to control MRV flow and a MRV flow setpoint may be adjusted to control MRL/MRV flow ratio. As shown in Figure 3, a Flow Ratio Controller (FRC) 51 receives a MRL/MRV flow ratio from flow ratio detector (FR) 52 and compares the MRL/MRV flow ratio to a predetermined setpoint value. Based on an error signal formed as a combination of actual and desired MRL/MRV flow ratio, a control signal is provided to the Cold JT valve 16 to adjust the valve position. This additional feedback loop is needed to maintain a proper balance of flows within the heat exchanger to prevent, for example, the return temperature of line 120 from getting too cold, which may damage equipment.

Several available variables may be adjusted as additional MVs to maintain operation of various elements of the closed loop refrigeration cycle within operating constraints of the system. For example, returning to Figure 3, the Warm JT valve 18 and Cold JT valve 16 may each reach the fully open or fully closed positions, the mixed refrigerant ratio may be outside of a target value, or the mixed refrigerant (MRV or MRL) temperatures outside of acceptable ranges. If these MVs reach the constraints, the system may require: the compressor speed target be increased or decreased if the Warm JT valve 18 or the Cold JT valve 16 reach an upper or lower constraint, the MRL/MRV flow ratio be decreased if the temperature of MR exiting the heat exchanger at the warm bundle 110 (suction to first compressor) is too cold, and compressor antisurge control be achieved by opening the compressor recycle valve(s) when a predetermined distance to surge is reached. Further constraints may be based on mixed refrigerant compressor discharge pressure or mixed refrigerant compressor power. Satisfying these constraints may be accomplished by either operator intervention or by a computer monitoring and control system separate from the described exemplary embodiment.

Finally, certain actions can be added to improve process efficiency. For such an exemplary system, feedforward calculations using measured values of the current MR may be used to determine a new compressor speed target value based upon the mass of refrigerant flowing through the system. Figure 2 shows this additional Speed Feedforward block 205 providing the speed target setpoint value, and the calculations are described in more detail below with reference to the refrigerant recirculation-based control method. In such a case, for example, values of a table or graph showing optimal compressor speed for a given mixed refrigerant mass flow rate may be used to adjust compressor speed target value. Optimal compressor values for these purposes may be based on an independent variable, for example, compressor efficiency.

Target values for the MR compressor speed, or mixed refrigerant centrifugal compressor guidevane angle or mixed refrigerant axial compressor stator blade angle, may be determined using an off-line or on-line steady-state optimization computer program or calculation receiving a number of variables or factors including, but not limited to: (a) LNG production target; (b) natural gas feed conditions; (c) mixed refrigerant inventory; (d) mixed refrigerant composition; (e) operating pressures; (f) available power; (g) equipment design; (h) compressor characteristics; and/or (i) external conditions.

Target values for the MRL/MRV flow ratio may be determined by using an off-line or on-line steady-state optimization computer program or calculation receiving a number of variables or factors including and not limited to: (a) LNG production target; (b) natural gas feed conditions; (c) mixed refrigerant inventory; (d) mixed refrigerant composition; (e) operating pressures; (f) available power; (g) equipment design; (h) compressor characteristics; and/or (i) external conditions.

### Refrigerant Recirculation-Based Control System

The second exemplary embodiment of the present invention employs a refrigerant recirculation based control system employing feedforward and feedback control to adjust the temperature of the LNG production by changing MRL and MRV flow rates (to change Total MR flow), MRL/MRV flow ratio and then Total MR flow/LNG flow ratio, and then adjusting a compressor MV such as speed to a value within an optimal operating range of the compressor for the current MR mass flow.

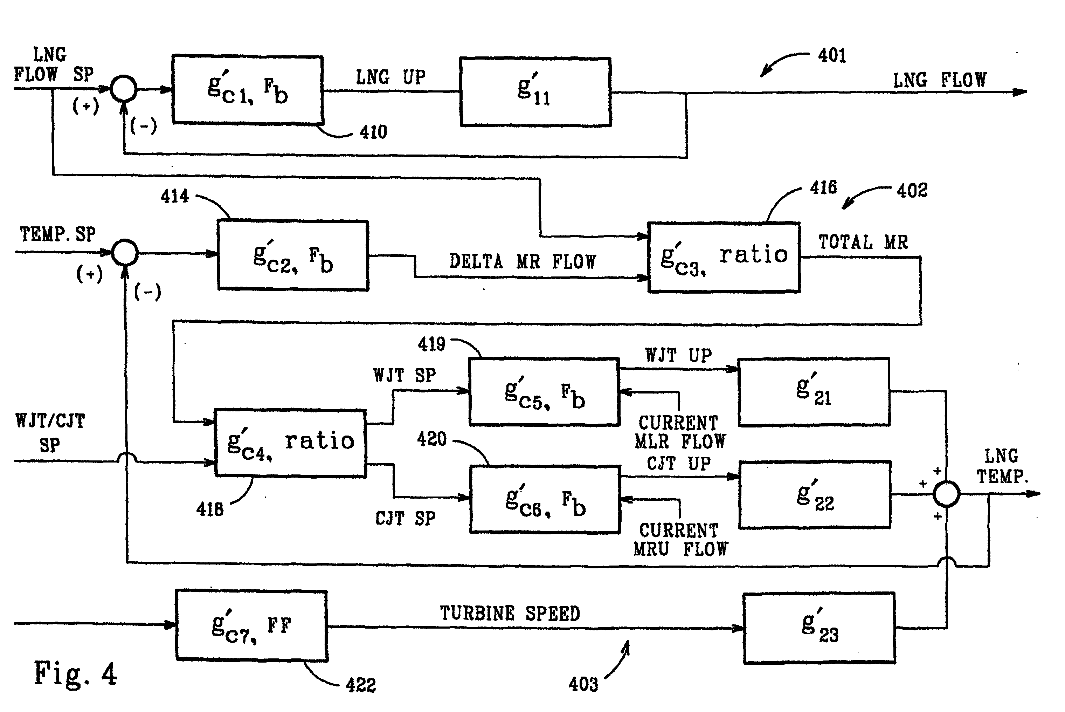

Figure 4 is a high level block diagram illustrating the basic control feedback and feedforward loops for the exemplary recirculation-based embodiment of the present invention. The exemplary embodiment includes three main control sections: a first feedback loop 401 controls the flow rate of LNG production; a second feedback and feedforward section 402 controls the temperature of the LNG production; and a third feedforward section 403 adjusts compressor speed to maintain the compressor speed within an optimal range based upon the mass of refrigerant (the total MR) flowing through the closed loop refrigeration cycle.

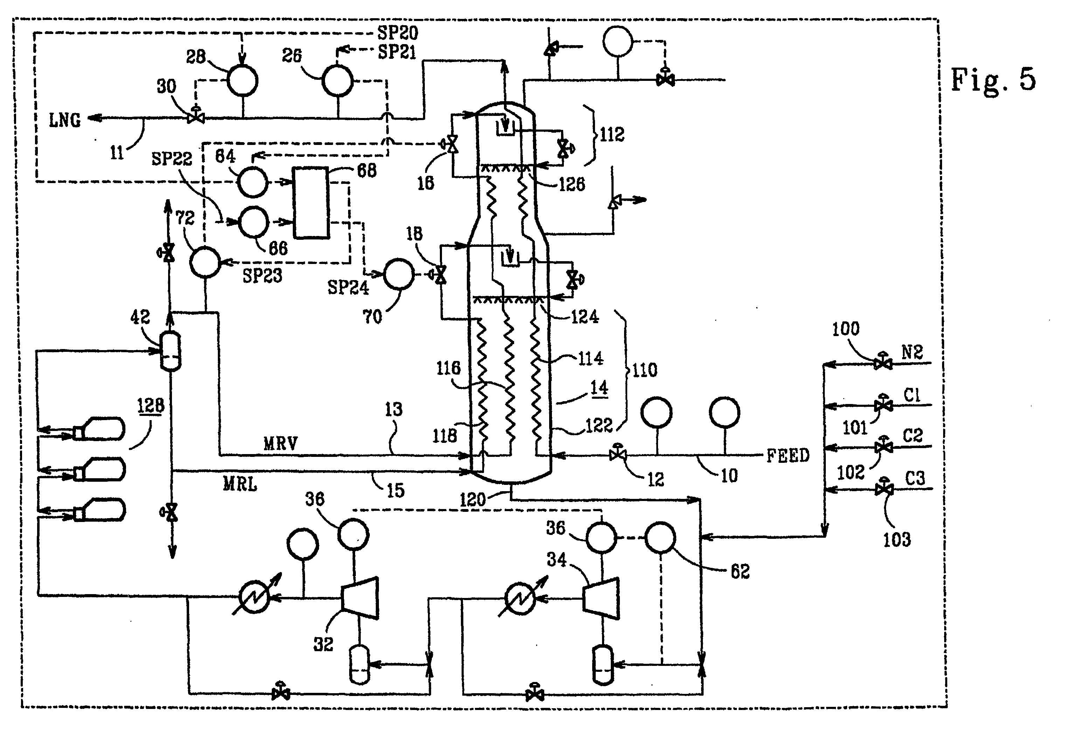

In the first feedback control loop 401, LNG flow is controlled in order to change and maintain the LNG outlet stream (LNG production) to a desired production LNG flow rate, and may be accomplished by, for example, adjusting the position of the LNG offtake valve 30 (Figure 5). The first feedback loop includes an LNG flow setpoint value which is determined offline, and may be determined, for example, by production requirements.

The dynamics of the LNG plant process may be modeled by transfer functions and the techniques described with reference to the compressor speed based control method may be used. Plant process of 401 models dynamic process of LNG flow rate to changes in LNG offtake valve position through transfer function g₁₁'. A flow rate controller 410 adjusts LNG flow rate, based upon an error signal formed from a combination of the LNG flow rate setpoint and the actual measured LNG flow rate. The flow rate controller 410 offsets variations in LNG flow rate by control transfer function g_{C1}' which may be derived from the process transfer function g₁₁'.

The LNG flow setpoint value, process transfer function g₁₁' and control transfer function g_{C1}' may be the same as the LNG flow rate setpoint, process transfer function g11 and control transfer function g_{C1} for the compressor speed-based control method shown in 201 of Figure 2.

The second section 402 is an LNG temperature feedback/feedforward control system which maintains the LNG temperature about a setpoint value using an LNG Temperature setpoint value and a ratio of Warm IT valve and Cold JT valve setpoints. Control of the LNG temperature is done by adjustment of the desired target value of the ratio of total MR flow rate to LNG flow rate. First, a current measured LNG outlet stream temperature is compared to an LNG Temperature setpoint value to provide an error signal to MR Change Controller 414 which determines by control transfer function g_{C2}' an incremental change in mixed refrigerant flow rate, defined as a Delta MR flow rate value, to offset the difference in LNG outlet temperature. Using the Delta MR flow rate value and the LNG flow setpoint value, a Total MR Controller 416 determines by control transfer function g_{C3}' the Total MR Flow Rate necessary from the following equation (3):$\text{Total MR Flow Rate = Delta MR flow rate +} \text{(LNG Flow Setpoint Value * Total MR to LNG Flow ratio)}$

Second, the Total MR flow rate and a MRL/MRV ratio setpoint are used to adjust the MRL flow rate and MRV flow rate of the MR recirculating through the process. The total MR flow rate and a MRL/MRV ratio setpoint are provided to MRL/MRV Ratio Controller 418 which determines by control transfer function g_{C4}' a new MRL flow rate setpoint and a new MRV flow rate setpoint, which are given by the following equations (4) and (5):$\text{new MRV flow rate setpoint = Total MR Flow Rate *} \text{1/(MRL/MRV ratio setpoint + 1)}$$\text{new MRL flow rate setpoint = Total MR flow rate -} \text{MRV flow rate setpoint.}$

Once the new MRV and MRL flow rate setpoint values are determined, two feedback control loops control the individual MRL and MRV flow rates. The first of these employs MRL flow controller 419 which receives the MRL flow rate setpoint value and the current measured MRL flow rate and forms an error signal as a combination of these MRL flow rate values, and through control transfer function g_{C5}' adjusts the MRL flow rate, for example, by adjusting the position of Warm JT valve 18. Similarly, the second control loop employs MRV flow controller 420 which receives the MRV flow rate setpoint value and the current measured MRV flow rate and forms an error signal as combination of these MRV flow rate values, and through control transfer function g_{C6}' adjusts the MRV flow rate, for example, by adjusting the position of Cold JT valve 16. In the manner as described previously, the control transfer functions g_{C5}' and g_{C6}' may be determined from the open loop modeled LNG plant process transfer functions g₂₁' and g₂₂' which relate the LNG plant process to the MRL and MRV flow rate effect on the LNG outlet stream temperature.

Figure 5 is a schematic flow diagram of a typical MR LNG plant 40B indicating the placement of sensors and controllers for a recirculation-based control system implementing the control system as illustrated in Figure 4.

Referring to Figure 5, the first control loop 401 of the recirculation based control system of Figure 4 maintains the LNG outlet stream at a predetermined flow rate given by setpoint SP20, and the first control loop includes Flow Indicator Controller 28, and LNG offtake valve 30, and operates in a manner similar to the first control loop of the compressor speed-based system. FIC 28 measures the LNG outlet stream flow rate, and receives the LNG flow setpoint SP20. Based on an error signal formed as a combination of the measured outlet stream flow and setpoint SP20, the position of the LNG offtake valve 30 is opened or closed to maintain the LNG outlet stream at the desired flow rate.

The second feedforward/feedback control loop 402 of Figure 4 of the recirculation based control system is shown in Figure 5 and includes Temperature Indicator Controller (TIC) 26, Total MR Flow Rate Controller TMR FRC 64, MRL and MRV Flow Rate Controller (MR L/V FRC) 66, Feed Forward Logic (FFL) 68, MRV Flow Indicator Controller (MRV FIC) 72 for adjusting MRV flow by adjustment of Cold JT Valve 16, and MRL Flow Indicator Controller (MRL FIC) 70 for adjusting MRL flow by adjustment of Warm JT Valve 18.

TIC 26 receives an LNG outlet stream setpoint value SP21 corresponding to the desired outlet stream temperature of the LNG, and also measures the current temperature of the LNG outlet stream. Based on an error signal, which is related to the difference between the current temperature and the setpoint value SP21, a TIC 26 provides a temperature adjustment control signal which indicates the Delta MR flow necessary to adjust LNG temperature, and this control signal is provided to the TMR FRC 64, which corresponds to the Total MR Controller 416 of Figure 4. TMR FRC 64 also receives the setpoint value SP20 corresponding to the desired LNG outlet stream flow rate. Using equation (1), TMR FRC 64 provides the FFL 68 a desired total MR flow rate.

In addition, MRL and MRV Flow Ratio Controller (MR L/V FRC) 66, which corresponds to the MRL/MRV Ratio Controller 418 of Figure 4, receives a MRL/MRV flow rate ratio setpoint value SP22 and the current MR flow rate from TMR FRC 64, and provides new MRL and MRV flow rate setpoints, which are received and converted into setpoint values SP23 and SP24 respectively by FFL 68 using the equations (2) and (3).

Finally, the MRL controller 419 and MRV Controller 420 are implemented by the MRV Flow Indicator Controller (MRV FIC) 72 for adjusting MRV flow based upon new setpoint value SP23 by adjustment of Cold JT Valve 16, and MRL Flow Indicator Controller (MRL FIC) 70 for adjusting MRL flow based upon new setpoint value SP24 by adjustment of Warm JT Valve 18.

Consequently, the control of the MRL flow rate to a desired setpoint value is provided by feedback loop adjusting the position of Warm JT Valve 18, and control of the MRV flowrate to a desired setpoint value is done by feedback via adjustment of the Cold JT valve 16. The desired target setpoint value SP22 for the ratio of mixed refrigerant liquid flow to mixed refrigerant vapor (MRL/MRV) flow rate is maintained by adjusting the setpoint value SP24 of the MRL flowrate. Finally, the ratio of total MR flow rate to LNG flow rate is attained by adjusting the setpoint value SP23 of the MRV flowrate. In this manner, the LNG outlet temperature is maintained near the setpoint value SP21 and the LNG outlet stream flow rate is maintained near the setpoint value SP20.

Returning to Figure 4, Feedback loop 401 and LNG temperature feedback/feedforward section 402 maintain LNG production while independently maintaining LNG temperature. Maintaining temperature by fast response by changing the MRL, MRV, and total MR flow/LNG flow may result in the compressor being operated at a speed outside of the preferred operating range of the compressor for a given mass of refrigerant flowing through the compressor. Consequently, an embodiment of the present invention may include a third feedforward section 403 having control process 422 with control transfer function g_{C7}', as shown Figure 4, which adjusts the compressor speed based on the mass of total refrigerant flowing through the compressor system. The output compressor speed provided through gain g_{C7}' affects LNG outlet temperature through process transfer function g₂₃'.

As shown in Figure 5, the feedforward section 403 of Figure 4 may be implemented by Feedforward controllers (FF) 62 and Speed Controller pair 36 and 38 for each respective compressor stage (i.e. low pressure compressor 34 and high pressure compressor 32). Although the present embodiment is described for compressor speed, equivalent compressor values may be used such as, but not limited to, stator blade position or guidevane angle. FF 62 measures the received MR mass flow. The FF 62 then provides a compressor value to the speed controller 36 and 38 to adjust operation of the compressor, the respective low pressure compressor 34 or high pressure compressor 32, based on available information of compressor efficiency. Such adjustment may further be based on performance curves derived from compressor performance as a function of mass flow rate of MR.

In a third control loop, speeds of the mixed refrigerant low pressure and high pressure compressors 34 and 32 are additionally and separately adjusted by FF 62. Each FF 62 measures the current mixed refrigerant flow rate for the respective compressor and sends speed control signal to the respective compressor speed controller 36 or 38 based upon a desired mass flow rate for low pressure compressor 34 or high pressure compressor 32 to ensure maximum compressor efficiency. Compressor speed controller 36 or 38 then sets the respective compressor speed accordingly. In plants where speed is fixed or cannot be changed for adequate control, moving an equivalent variable is possible. For example, guidevane angles of one or more mixed refrigerant centrifugal compressors may be adjusted as a function of the current mass flow rate for each compressor to ensure maximum compressor efficiency. Also, stator blade angles of one or more mixed refrigerant axial compressors may be adjusted as a function of the current mass flow rate for each compressor to ensure maximum compressor efficiency.

Compressor antisurge control is achieved by opening the compressor recycle valve(s) when a predetermined compressor surge level is reached. This may be accomplished by, for example, operator intervention or a dedicated anti-surge controller.

Constraint control of the temperature of the recirculating refrigerant at the warm bundle 110 of the main cryogenic heat exchanger may be accomplished by determining an appropriate low temperature constraint value for temperature at the warm bundle 110 through, for example, operational requirements of the system; and then measuring the warm end temperature and comparing the measured warm end temperature to the constraint value. If the temperature is less than the constraint value, the desired target value of the MRL/MRV flow ratio is reduced.

Target values for the mixed refrigerant compressor speed, or mixed refrigerant centrifugal compressor guidevane angle or mixed refrigerant axial compressor stator blade angle, are determined using an off-line or on-line steady-state optimization computer program or calculation receiving a number of variables or factors including, but not limited to: (a) mixed refrigerant composition; (b) operating pressures; (c) available power; (d) equipment design; (e) compressor characteristics; and/or (f) external conditions.

Target values for the MRL to MRV flow ratio are determined by using an off-line or on-line steady-state optimization computer program or calculation receiving a number of variables or factors including and not limited to: (a) LNG production target; (b) natural gas feed conditions; (c) mixed refrigerant inventory; (d) mixed refrigerant composition; (e) operating pressures; (f) available power; (g) equipment design; (h) compressor characteristics; and/or (i) external conditions.

### Modeling the Exemplary Embodiments of the Present Invention

Results of a dynamic simulation of an LNG plant employing the control systems and rigorous non-linear models of the LNG process may be analyzed in order to compare performance of the LNG plant control methods as shown in Figure 3 and Figure 5. The designed control system transfer functions and the linear models used to define the process transfer functions may be determined as described previously. The performance of the speed-based control method and the recirculation-based control method are demonstrated using a rigorous, non-linear model of a typical two-bundle baseload LNG plant. The results are from closed-loop dynamic simulations of the MCHE/MCR loop section. Table 1 lists system parameters, including key process variables and the corresponding initial steady-state values, for the non-linear model used in the exemplary dynamic simulation. The values of Table 1 represent a "snap-shot" in time of the LNG plant being modeled.

**Table 1**

| **MODEL VARIABLES FOR LNG PLANT MODEL** | | | | | | | |
|---|---|---|---|---|---|---|---|
| | | | | | | | |
| | **TAG** | | **PLANT** | | **SIMULATION** | | **%ERROR** |
| **VALVE POSITION** | | | | | | | |
| LNG offtake | E5TIC01A | MV | 78 | % | 90.62 | % | 16.18 |
| Cold JT | E5PRIC15 | MV | 82 | % | 90.075 | % | 9.85 |
| Warm JT | E5FIC002 | MV | 83 | % | 97.461 | % | 17.42 |

| **COMPRESSOR** | | | | | | | |
|---|---|---|---|---|---|---|---|
| **SPEED** | | | | | | | |
| 4K-2 | E4SI023A | set | 4556 | rpm | 4556 | rpm | 0.00 |
| 4K-3 | E4SI028A | set | 4499 | rpm | 4499 | rpm | 0.00 |

| **FLOWS** | | | | | | | |
|---|---|---|---|---|---|---|---|
| LNG product after flash tank | E5FI006A | | 715 | m3/h | | m3/h | |
| LNG offtake from MHE | calc. | | 18687 | kmol/h | 18110.27 | kmol/h | -3.09 |
| MRV | E5FI001A | | 173200 | Nm3/h | 183666 | Nm3/h | 6.04 |
| MRV | calc. | | 7732 | kmol/h | 8196.58 | kmol/h | 6.01 |
| MRL | E5FIC002 A | | 870 | m3/h | | m3/h | |
| MRL | calc. | | 17352 | kmol/h | 19683.98 | kmol/h | 13.44 |
| 4K-2 Discharge | E4FI010B | | 608897 | Nm3/h | 624738.8 | Nm3/h | 2.60 |
| 4K-3 Discharge | E4FI011B | ? | **578101** | Nm3/h | 624738.8 | Nm3/h | 8.07 |

| **PRESSURES** | | | | | | | |
|---|---|---|---|---|---|---|---|
| Shell, cold end | ESPIC002 | | 3.663 | kg/cm2a | 3.746 | kg/cm2a | 2.27 |
| Shell, warm end | E5PI009 | | 3.203 | kg/cm2a | 3.16 | kg/cm2a | -1.34 |
| LNG offtake | E5PI010 | | 21.903 | kg/cm2a | 23.161 | kg/cm2a | 5.74 |
| Feed | E5PI012 | | 38.523 | kg/cm2a | 38.573 | kg/cm2a | 0.13 |
| MRV, cold end | E5PI008 | | 29.843 | kg/cm2a | 29.763 | kg/cm2a | -0.27 |
| MRV, warm end | E5PI001 | | 46.333 | kg/cm2a | 47.172 | kg/cm2a | 1.81 |
| MRL, midpoint | E5PI007 | | 36.993 | kg/cm2a | 40.0998 | kg/cm2a | 8.40 |
| MRL, warm end | E5PI001 | | 46.333 | kg/cm2a | 47.258 | kg/cm2a | 2.00 |
| 4K-2 Suction | E4PI0036 | | 32 | kg/cm2a | 3.129 | kg/cm2a | -2.22 |
| 4K-2 Discharge | E4PI015A | | 13.85 | kg/cm2a | 13.503 | kg/cm2a | -2.51 |
| 4K-3 Suction | E4PI0041 | | 13.543 | kg/cm2a | 13.07 | kg/cm2a | -3.49 |
| 4K-3 Discharge | E4PI017B | | 49.85 | kg/cm2a | 49.119 | kg/cm2a | -1.47 |
| HPSEP | E5PI001 | | 46.333 | kg/cm2a | 47.1722 | kg/cm2a | 1.81 |

| **TEMPERATURES** | | | | | | | |
|---|---|---|---|---|---|---|---|
| Shell, cold end | E5TI024 | ? | -144.02 | C | -156.38 | C | -9.57 |
| Shell, midpoint | E5TI025 | | -117.7 | C | -120.16 | C | -1.58 |
| Shell, warm end | E5TI008 | | -35.7 | C | -35.857 | C | -0.07 |
| LNG offtake | E5TIC01A | | -147 | C | -146.087 | C | 0.72 |
| LNG, midpoint | E5TI26/27 | avg | -117.7 | C | -113 | C | 3.02 |
| Feed | E5TI023 | | -33.3 | C | -33.248 | C | 0.02 |
| MRV, cold end | E5TI030 | | -144 | C | -147.447 | C | -2.67 |
| MRV, midpoint | E5TI021 | | -117.1 | C | -109.82 | C | 4.67 |
| MRV, warm end | E5TI047 | | -32.8 | C | -33.1 | C | -0.12 |
| MRL, midpoint | E5TI031 | | -116.6 | C | -108.332 | C | 5.28 |
| MRL, warm end | E5TI047 | | -32.8 | C | -33.096 | C | -0.12 |
| 4K-2 Suction | E4TI004B | | -38.7 | C | -36.0657 | C | 1.12 |
| 4K-2 Discharge | E4T3007B | | 59.7 | C | 57.08 | C | -0.79 |
| 4K-3 Suction | E4TI006B | | 30.5 | C | 30.2046 | C | -0.10 |
| 4K-3 Discharge | E4TI008B | | 129.3 | C | 127.777 | C | -0.38 |
| HPSEP | E5TI047 | | -32.8 | C | -33.1 | C | -0.12 |

| **COMPOSITIONS** | | | | | | | |
|---|---|---|---|---|---|---|---|
| Feed, N2 | | | 9.52E-03 | | 9.30E-03 | | -2.31 |
| Feed, C1 | | | 0.9188 | | 0.8976 | | -2.31 |
| Feed, C2 | | | 0.0517 | | 0.0505 | | -2.32 |
| Feed, C3 | | | 0.021 | | 0.050969 | | 78.66 |
| Feed, C4 | | | 4.02E-02 | | 0 | | x |
| Feed, 14 | | | 3.49E-02 | | 0 | | x |
| Feed, 15 | | | 1.75E-04 | | 0 | | x |
| MCR,N2 | | | 0.0564 | | 0.05648 | | 0.14 |
| MCR, C1 | | | 0.4094 | | 0.4044579 | | -1.21 |
| MCR, C2 | | | 0.4617 | | 0.4556615 | | -1.31 |
| MCR, C3 | | | 0.0725 | | 0.0833973 | | 15.03 |

| **VARIOUS** | | | | | | | |
|---|---|---|---|---|---|---|---|
| MR Flow ratio | | calc | 2.2441 | | 2.4014 | | 7.01 |
| MR/LNG Flow Ratio | | calc | 1.3423 | | 1.5394 | | 14.69 |
| Compression Ratio | | | 15.12 | | 15.6979 | | 3.82 |
| HPSEP Level | | | 63 | % | 59 | % | 6.349 |

These values of Table 1 are steady-state values at a particular instant of time. As known in the art, each particular LNG plant has different operating characteristics, and a dynamic simulation of an LNG plant using a non-linear model would be customized for the particular LNG plant. Consequently, the comparison, control objectives and corresponding steady-state operating values of Table 1 are exemplary.

The control objectives are set forth below in Table 2.

**Table 2**

| **Control Objectives** | | | |
|---|---|---|---|
| **Control** | **Setpoint** | **Allowed range** | |
| Variable | | | |
| LNG | 18110 kmol/h | +/-2% | |
| flow | | | |
| LNG temperature | -146 C | +/- 2.5 C | |

| **MV Constraints** | | | |
|---|---|---|---|
| **MV** | **Max** | **Min** | **Rate of Change** |
| LNG, CJT, WJT | 1.16 | 0 | |
| 4K-2 Speed | 4900 rpm | 3500 rpm | <5 rpm/sec |
| 4K-3 Speed | 4900 rpm | 3500 rpm | < 5 rpm/sec |

| **Output constraints** | | | |
|---|---|---|---|
| **Variable** | **Max constraint** | **Min constraint** | |
| Discharge pressure | 51 kg/cm2a | | |
| Shell temp, warm end | | -38 C | |
| Distance to surge | | 8 % away from surge | |

Table 2 gives exemplary maxima, minima and ranges for control objectives, and also MV and output constraints. In order to relate these objectives to other systems, a brief description follows of how these objectives are determined. For LNG flow rate, the maximum value of LNG plant production is determined by the particular plant and natural gas supply, and the minimum value is zero, corresponding to a shut down of the plant. Consequently, for LNG flow rate, the desired flow rate is determined by LNG plant operators and plant production schedule. Once the desired flow rate is determined, the exemplary control objective of +/- 2% change relates to typical values currently used for flow control in LNG plants. Larger values for a range of LNG flow rate change may be used up to the maximum and minimum values, but the efficiency of the LNG plant may be affected. Smaller values for a range of LNG flow rate change may also be used, but the minimum range will be determined by the accuracy of the measurement devices, the accuracy of the control element, and the characteristics of the transient response of the LNG plant process. Consequently, the minimum range may be found from a study of the LNG plant or by simulation.

Determination of maximum and minimum operating ranges for the temperature of the LNG outlet stream was described previously, and is dependent upon the downstream processes such as, but not limited to, flash cycle, sub-cooled process or other transport or storage considerations. The exemplary range of LNG temperature variation of +/- 2.5 degrees centigrade is determined from typical plant operation, but smaller ranges may be used. The minimum range will be determined by the accuracy of the measurement devices, the accuracy of the control element, and the characteristics of the transient response of the LNG plant process.

Determination of maximum and minimum operating ranges for the low pressure and high pressure compressors is dependent upon the manufacturers specifications for the particular compressors used. The exemplary range of compressor speed variation of less than 5 rpm/sec is determined from typical plant compressors. The maximum rate of change will be determined by the machinery operational considerations.

Also as described previously, the operating range of the Warm JT, Cold JT and LNG offtake valves is between fully open and fully closed, and these are allowed to move freely within this range.

Finally, the output constraints are also determined by the particular LNG plant design. The discharge pressure is determined by the design pressure of the heat exchange circuit, the shell temperature at the warm end is determined by the minimum temperature before damaging downstream equipment, which may be approximately -50 degrees centigrade, with -38 degrees centigrade typically used in LNG plant operation. The distance to surge is set at a reasonable value to prevent damage to the compressors.

For the given example using the compressor speed-based control method as illustrated by Figure 2 and PID controllers implementing the control fimctions, the control transfer functions have the following tuning parameters: for g_{C1} (Control of LNG flow rate), the proportional gain is 10⁻⁵ 1/(kgmoles/hr), and integral time τ_{I} is 2 sec.; and for g_{C2} ( Control of LNG Temperature), the proportional gain is -500 rpm/ C, and the integral time τ_{I} is 295 sec. For the third feedback loop, a model-based control algorithm is used, as described previously. This includes a first order filter, and the filter time constant is used as the adjustable tuning parameter. The time constant is related to the desired speed of the response of the closed-loop system, and may be limited by stability considerations.

For the given example using the refrigerant recirculation-based control method as illustrated by Figure 4, the proportional gain constants have the following tuning parameters: for g_{C1}' (Control of LNG flow rate), the proportional gain is 10⁻⁵ 1/(kg-moles/hr), and the integral time τ_{I} is 2 sec.; for g_{C2}' (Control of LNG Temperature), the proportional gain is 600 , and the integral time τ_{I} is 2500 sec.; for g_{C3}', the gain is determined from the model of the process derived from the open loop response; for g_{C4}', the gain is determined from the model of the process derived from the open loop response; for g_{C5}' (Control of Warm JT valve flow rate), the proportional gain is 10⁻⁵ 1/(kg-moles/hr), and the integral time τ_{I} is 1 sec.; for g_{C6}' (Control of Cold JT valve flow rate) the proportional gain is 3.528 X 10⁻⁶ 1/(kg-moles/hr), and the integral time τ_{I} is 1 sec.; and for g_{C7}', the gain is determined from the model of the process derived from the open loop response.

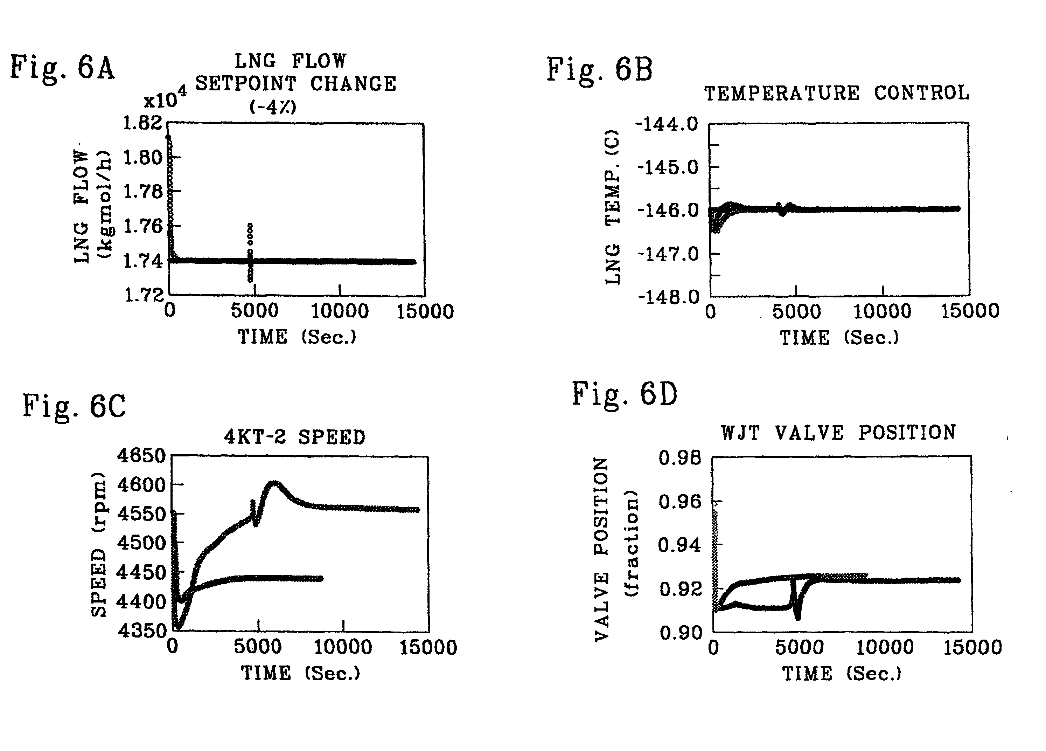

Four different simulation scenarios are illustrated. Results are presented for both the speed-based control method and the recirculation-based control method, and compared when appropriate, to the desired setpoint values. The results of the simulation scenarios are illustrated in Figures 6 through 9, which are given as the behavior of various variables under study as a function of time. The time scale used in Figures 6 through 9 is given in seconds (28800 seconds = 8 hours.) The illustrated simulations of Figures 6 through 9 show that both the compressor speed-based method (marked (a)) and the recirculation-based method (marked (b)) adequately satisfy the control objectives of the various scenarios.

Figures 6A through 6D illustrate the performance of the compressor speed based and recirculation based control methods using a 4% step reduction in LNG flow setpoint scenario. Figure 6A is a graph illustrating control of LNG flow rate versus time, Figure 6B is a graph illustrating control of LNG temperature versus time, Figure 6C is a graph illustrating control of compressor speed versus time, and Figure 6D is a graph illustrating movement of warm IT valve position versus time for the 4% step reduction in LNG flow setpoint scenario.

Figure 6A and Figure 6B illustrate that tight control of flow and temperature respectively is achieved with both the compressor-speed based control method and the recirculation based control method. Figure 6C shows the compressor speed as a function of time. Both control methods show a fast initial reduction in the speed to correct for the initial temperature reduction due to lower heat load. As indicated earlier, the speed-based strategy is designed to reset the speed back to its original target value (4550 rpm for this example), and does so by employing the Warm JT valve position as an additional MV. Reducing the opening of the Warm JT valve has an effect on the LNG temperature that is in the same direction, although slower than, that of the compressor speed. The combined effect of both MVs, when arranged according to the scheme shown in Figure 3, drives the compressor speed back to its original value soon after the initial move. For this example, at the new steady-state the speed has been reset to its original target value and the warm JT has closed by about 5%.

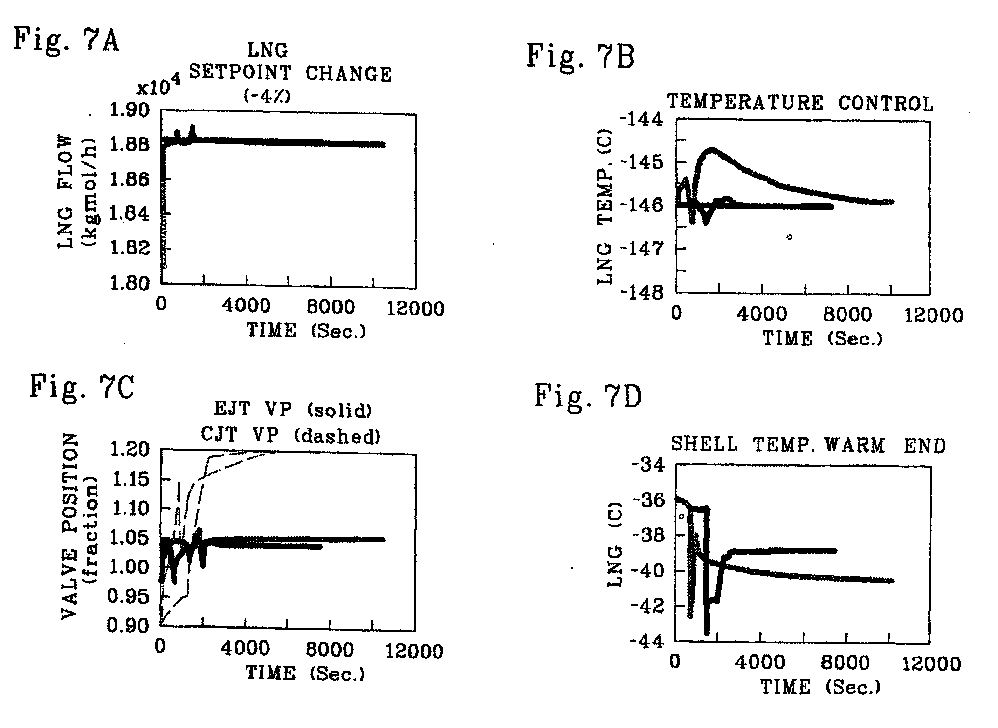

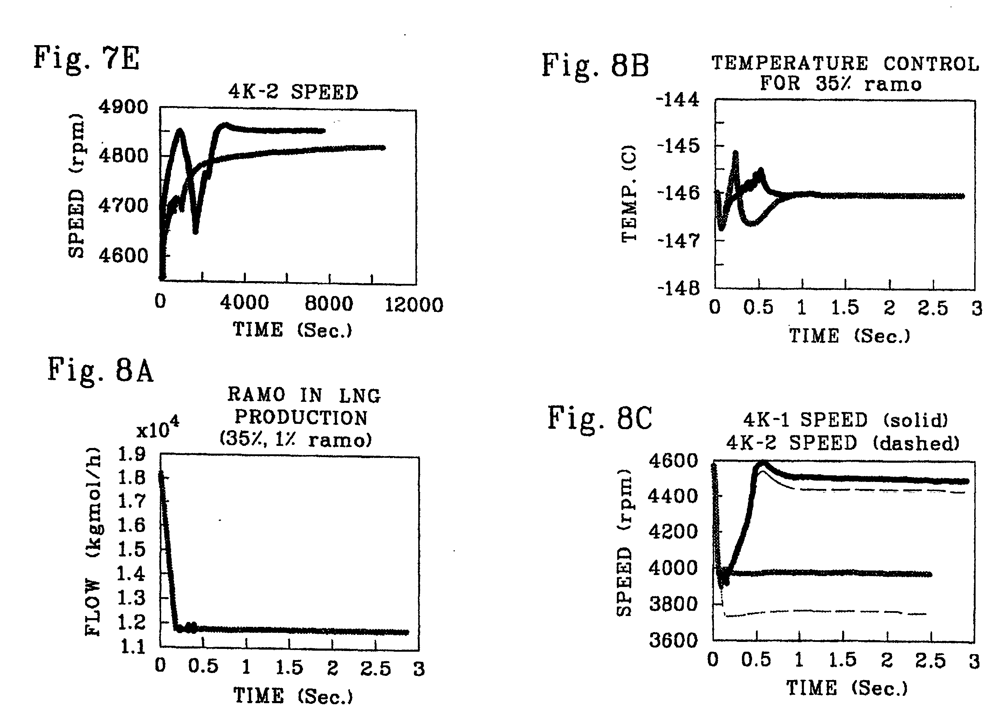

Figures 7A through 7E illustrate the performance of the compressor speed based and recirculation based control methods using a 4% step increase in LNG flow setpoint scenario. Figure 7A is a graph illustrating control of LNG flow rate versus time, Figure 7B is a graph illustrating control of LNG temperature versus time, Figure 7C is a graph illustrating warm JT valve position and cold JT position versus time, Figure 7D is a graph illustrating shell temperature of a heat exchanger versus time, and Figure 7E is a graph illustrating control of compressor speed versus time for a 4% step increase in LNG flow setpoint scenario.

The performance as illustrated in Figures 7A through 7E shows that both LNG flow and temperature are also controlled in this scenario well within the required range of Table 2, although the temperature response is slower for the recirculation-based method. The Figures 7A through 7E illustrate some of the constraint control actions for this scenario. The initial steady-state LNG outlet stream is already a high production value, and the LNG flow rate setpoint is further increased by 4%. The Warm JT valve position does not hit its constraint (defined at 1.16 in Table 2), but the Cold JT valve does reach a constraint. In the case of the speed-based method, the Cold JT valve position is increased as one measure to prevent the heat exchanger shell warm end from getting too cold. The position of Cold JT valve 16 reaches the constraint, but the control methods still manage to control the shell warm bundle close to its constraint. When the position of Cold JT valve 18 reaches its constraint value, the control methods of this example increase the speed target value from 4550 rpm for the compressor to about 4850 rpm.

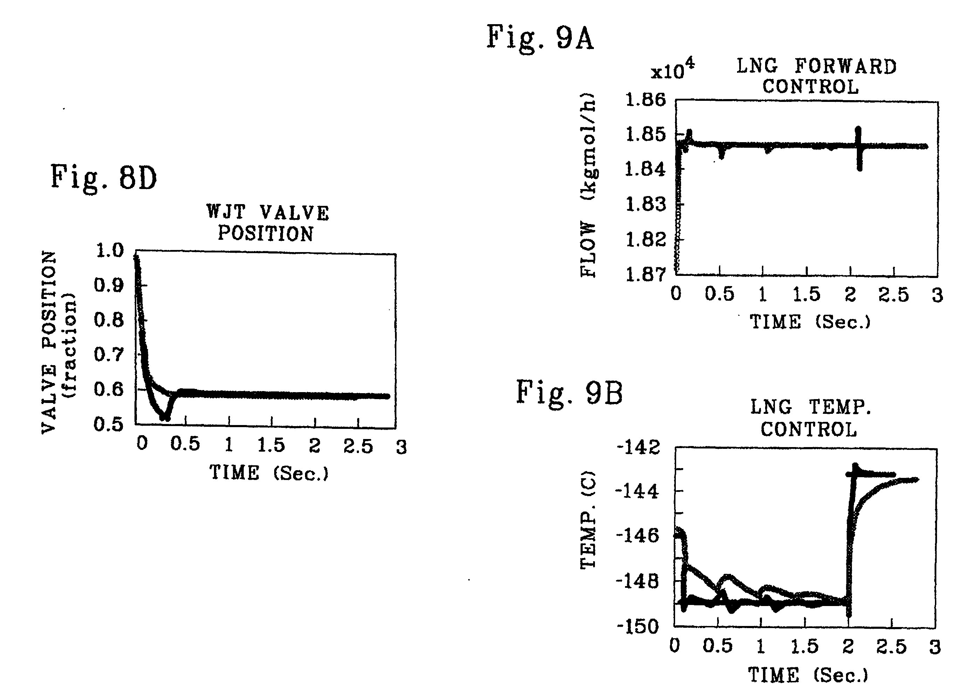

Figures 8A through 8D illustrate the performance of the compressor speed based and recirculation based control methods for a 35% ramp reduction, at 1% per minute, in LNG flow setpoint scenario. Figure 8A is a graph illustrating control of LNG flow rate versus time, Figure 8B is a graph illustrating control of LNG temperature versus time, Figure 8C is a graph illustrating control of low pressure and high pressure compressor speed versus time, and Figure 8D is a graph illustrating movement of warm JT valve position versus time for a 35% ramp reduction, at 1% per minute, in LNG flow setpoint scenario.

Figures 8A through 8D illustrate that control of LNG flow rate and temperature by the exemplary control methods is well within the requirements given in Table 2. Figure 8C shows compressor speeds for this example, and shows that in the speed-based strategy, once the production flow rate ramp-down is nearly complete, and with the assistance of adjustment of the Warm JT valve position, the compressors return to their original speed. Consequently, the compressors have enough speed operating range for a subsequent ramp-down (or ramp-up) in LNG flow rate. For this exemplary 35% production ramp-down scenario the compressors are nearing compressor surge conditions. For this situation, surge conditions are prevented by opening recycle valves for each compressor once a distance to surge falls below 8%.

Figure 9A is a graph illustrating control of LNG flow rate versus time, and Figure 9B is a graph illustrating control of LNG temperature versus time, for a servo change and disturbance rejection scenario. As is shown, both the compressor speed-based and recirculation based control methods provide adequate control of LNG flow rate and temperature. For this scenario, the following sequence of events was simulated: at 100 sec., Increase LNG Flow SP + 2% (18472); at 1000 sec., Change LNG Temp SP by 2% (colder; -149 degrees centigrade); at 5000 sec., Reduce Feed Pressure by 2%; at 10000 sec, Reduce C1 composition in Feed by 2%; at 15000 sec., Increase MCR temp into HPSEP by 2%; and at 20000 sec., Change LNG Temp SP by 4% (warmer; -143.1 degrees centigrade).

## Claims

1. A method for controlling the production of a liquefied natural gas (LNG) outlet stream (222) by refrigeration of the natural gas flowing through a liquefaction process, comprising the steps of:
(a) measuring a temperature and a flow rate of the LNG outlet stream (222); and
(b) varying the refrigeration of the natural gas to adjust the temperature value of the LNG outlet stream (222) and independently adjusting the rate of the LNG flowing through the process, thereby to maintain the flow rate of the LNG outlet stream (222) at a predetermined flow value and the temperature at a predetermined temperature value.

2. The method of Claim 1, wherein step b) further comprises the steps of:
providing the refrigeration in closed loop refrigeration cycle (226) in which a compressor (238) adjusts the flow and pressure of a refrigerant, and
varying at least one compressor value selected from the group consisting of speed, guidevane angle and stator blade position of the compressor to adjust the operation of the closed loop refrigeration cycle, thereby to adjust the temperature value of the LNG outlet stream.

3. The method of Claim 2 further comprising the steps of:
(c) determining a corresponding target value based on constraints defining an operating range of the compressor for the at least one compressor value; and
(d) adjusting the at least one compressor value to the corresponding target value, and
(e) varying, based upon the adjustment to the at least one compressor value, at least one value associated with the recirculation of the refrigerant, thereby maintaining the flow value and temperature of the LNG outlet stream (222).

4. The method of Claim 3 wherein step d) varies the at least one refrigerant value based on a feedback signal based on the at least one compressor value and the corresponding target value.

5. The method of claim 1, further including the steps of
measuring a refrigerant flow rate and the flow rate of the LNG outlet stream (222);
forming a ratio of refrigerant flow rate to LNG flow rate; and
adjusting the ratio to adjust the operation of the closed loop refrigeration cycle (226);
thereby to adjust the temperature value of the LNG outlet stream (222).

6. The method of claim 5, wherein the refrigerant is partially condensed to form a refrigerant liquid and a refrigerant vapor and the flow rate measuring step further includes measuring a refrigerant vapor flow rate and a refrigerant liquid flow rate, and the ratio adjusting step further includes adjusting the refrigerant vapor flow to set the refrigerant flow rate and adjusting the refrigerant liquid flow to adjust the ratio until a predetermined flow ratio is achieved.

7. The method of claim 5, wherein the refrigerant is partially condensed to form a refrigerant liquid and a refrigerant vapor and the flow rate measuring step further includes measuring a refrigerant vapor flow rate and a refrigerant liquid flow rate; and the ratio adjusting step further includes adjusting the refrigerant liquid flow to set the refrigerant flow rate and adjusting the refrigerant vapor flow to adjust the ratio until a predetermined flow ratio is achieved.

8. The method of Claim 1 wherein the process for the liquefaction of natural gas is conducted in a plant which comprises a heat exchanger (210) having a warm end and a cold end and a natural gas feed stream inlet (216) at the warm end thereof, a conduit (218, 220) within the heat exchanger (210) for the cooling and liquefaction of the natural gas by indirect heat exchange with a refrigerant stream contained in a separate refrigeration cycle, and a liquefied natural gas line (222) for transmission of the LNG outlet stream at the cold end of the heat exchanger (210), said line having an LNG flow control device (224); which refrigeration cycle comprises a compressor (238) for compressing the refrigerant, a condenser (242) for condensing the compressed refrigerant, an expansion device (260) for expanding the condensed refrigerant and means for introducing the expanded refrigerant into an evaporation zone in the heat exchanger in which the expanded refrigerant is indirectly heat exchanged with and provides refrigeration to the natural gas stream, thereby liquefying the natural gas, and means for returning expanded, evaporated refrigerant from the warm end to the compressor (238); and wherein the control of the refrigeration is effected through feedback control by manipulating a process variable selected from the group consisting of:
operation of the compressor (238); and
operation of the expansion device (260).

9. The method of Claim 8 wherein the condenser (242) functions to condense partially the compressed refrigerant to produce a vapor refrigerant and a liquid refrigerant and there are separate expansion devices (260, 268) for each of the vapor refrigerant and the liquid refrigerant and either or both of the separate expansion devices (260, 268) are separately manipulated.

10. The method of Claim 8 wherein the refrigerant compressor (238) is selected from the group consisting of a centrifugal compressor having guide vanes and an axial compressor having stator blades and the flow rate of the LNG outlet stream (222) is subject to feedback control by adjustment of the LNG flow control device (224) and the temperature of the LNG outlet stream (222) is subject to feedback control by adjustment of a compressor variable selected from the group consisting of:
(a) the speed of the refrigerant compressor (238);
(b) the angle of the guide vanes; and
(c) the stator blade angle.

11. The method of Claim 10 wherein the compressor variable is the speed of the refrigerant compressor (238) and:
(a) if the temperature of the LNG outlet stream (222) is higher than the predetermined temperature, the speed of the refrigerant compressor (238) is increased; or
(b) if the temperature of the LNG outlet stream (222) is lower than the predetermined temperature, the speed of the refrigerant compressor (238) is decreased.

12. The method of Claim 10 wherein the compressor (238) is a centrifugal compressor (238) and the compressor variable is the angle of the guide vanes and:
(a) if the temperature of the LNG outlet stream (222) is higher than the predetermined temperature, the angle of the guide vanes is increased; or
(b) if the temperature of the LNG outlet stream (222) is lower than the predetermined temperature, the angle of the guide vanes is decreased.

13. The method of Claim 10 wherein the compressor (238) is an axial compressor and the compressor variable is the angle of the stator blades and:
(a) if the temperature of the LNG outlet stream (222) is higher than the predetermined temperature, the angle of the stator blades is increased; or
(b) if the temperature of the LNG outlet stream (222) is lower than the predetermined temperature, the angle of the stator blades is decreased.

14. The method of Claim 10 wherein the flow rate and temperature of the LNG outlet stream (222) are simultaneously controlled by feedback via simultaneous and coordinated adjustment through a multivariable controller of the LNG flow control device (224) and at least one of the compressor variables.

15. The method of Claim 8 wherein the conduit for the cooling of the natural gas in the heat exchanger passes through at least a warm zone (212) proximate the warm end of the heat exchanger (210) and a cold zone (214) proximate the cold end of the heat exchanger (210),
the evaporation zone in the refrigeration cycle (226) is divided into at least a warm zone (212) and a cold zone (214) corresponding, respectively, to the warm zone (212) and the cold zone (214) through which the conduit passes, with a separate expansion device (260, 268) for introducing condensed refrigerant into each of the warm zone (212) and the cold zone (214), and
wherein the warm zone expansion device (268) controls the flow of at least a portion of the condensed refrigerant to the warm zone (212) and the cold zone expansion device (260) controls the flow of at least a portion of the condensed refrigerant to the cold zone (214)
and further including the steps of:
(a) establishing a desired target value for the compressor variable;
(b) determining the current value of such compressor variable;
(c) comparing said desired target value to the current value; and
(d) adjusting the warm zone expansion device by means of feedback control based upon the difference and upon the integrated difference between the desired target value and the current value of the compressor variable, so as to achieve a change in the temperature of the LNG outlet stream (222) in the same direction as that achieved by adjustment of the compressor variable, and
(e) resetting of the compressor variable back to the desired target value.

16. The method of Claim 15 wherein the refrigerant is a multicomponent refrigerant which is partially condensed so as to provide a refrigerant liquid and a refrigeration vapor with the refrigerant liquid flowing through the warm zone (212) and the refrigerant vapor flowing through the cold zone (214) and the warm zone (212) and further including the steps of:
(a) predetermining a desired ratio of flow of liquid refrigerant to the flow of vapor refrigerant
(b) measuring the current flow rate of the liquid refrigerant;
(c) measuring the current flow rate of the vapor refrigerant;
(d) determining the current ratio of liquid refrigerant flow to vapor refrigerant flow; and
(e) controlling the cold zone expansion/flow control device (260) to adjust the liquid refrigerant flow to vapor refrigerant flow ratio to the predetermined ratio.

17. The method of claim 16 which further includes constraint control of the temperature of the refrigerant at the means for returning expanded, evaporated refrigerant from the warm end of the heat exchanger (210) to the compressor (238) comprising the steps of:
(a) predetermining a low temperature constraint value for the returning refrigerant at the warm end;
(b) measuring the temperature of the returning refrigerant at the warm end;
(c) comparing the measured temperature to the constraint temperature;
(d) if the measured temperature is less than the constraint temperature,
reducing the ratio of the flow rate of liquid refrigerant to the flow rate of vapor refrigerant until the measured temperature becomes greater than the constraint temperature.

18. The method of Claim 16 which further includes determining the compressor discharge pressure and the compressor power consumption and further includes constraint control of a process parameter selected from the group consisting of:
(a) compressor discharge pressure;
(b) compressor power consumption;
(c) cold expansion/flow control device; and
(d) warm expansion/flow control device;
by altering the desired target value for a compressor variable selected from the group consisting of:
(a) compressor speed;
(b) guide vane angle; and
(c) stator blade angle.

19. The method of Claim 18 wherein the establishment of the desired target value is effected by means of a steady state optimization calculation utilizing factors selected from the group consisting of:
(a) predetermined LNG outlet stream flow rate;
(b) natural gas feed stream conditions;
(c) quantity of refrigerant in the refrigeration cycle;
(d) composition of the mixed refrigerant;
(e) operating pressures;
(f) available power;
(g) equipment design;
(h) compressor characteristics; and
(i) ambient conditions.

20. The method of Claim 17 wherein the establishment of the desired ratio of the refrigerant liquid flow rate to the refrigerant vapor flow rate is effected by means of a steady state optimization calculation utilizing factors selected from the group consisting of:
(a) predetermined LNG outlet stream flow rate;
(b) natural gas feed stream conditions;
(c) quantity of refrigerant in the refrigeration cycle;
(d) composition of the mixed refrigerant;
(e) operating pressures;
(f) available power;
(g) equipment design;
(h) compressor characteristics; and
(i) ambient conditions.

21. The method of Claim 16 wherein:
(a) adjustment of the flow rate of the LNG outlet stream (222) is effected by feedback control of the LNG flow control device (224);
(b) adjustment of the refrigerant liquid flow rate to a predetermined value is effected by feedback control of the warm zone expansion/flow control device (268);
(c) adjustment of the refrigerant vapor flow rate to a predetermined value is effected by feedback control of the cold zone expansion/flow control device (260);
(d) a predetermined value for the ratio of refrigerant liquid flow rate to refrigerant vapor flow rate is maintained by adjusting the predetermined value for the refrigerant liquid flow rate;
(e) a predetermined value for the ratio of total refrigerant flow (liquid and vapor) to LNG outlet stream flow rate is attained by adjusting the predetermined value of the refrigerant vapor flow rate; and
(f) control of the temperature of the LNG outlet stream (222) is effected by adjustment of the predetermined value of the ratio of total refrigerant flow rate to LNG outlet stream flow rate.

22. The method of Claim 21 wherein the speed of the refrigerant compressor (238) is adjusted as a function of mass flow rate through the compressor (238) to attain maximum compressor efficiency.

23. The method of Claim 21 wherein the guidevane angles of the refrigerant compressor are adjusted as a function of mass flow rate through the compressor (238) to attain maximum compressor efficiency.

24. The method of Claim 21 wherein the stator blade angles of the refrigerant compressor are adjusted as a function of mass flow rate through the compressor (238) to attain maximum compressor efficiency.

25. The method of Claim 21 which further includes constraint control of the temperature of the returning refrigerant at the means for returning expanded, evaporated refrigerant from the warm end of the heat exchanger (210) to the compressor (238) comprising the steps of:
(a) predetermining a low temperature constraint value for the returning refrigerant at the warm end;
(b) measuring the temperature of the returning refrigerant at the warm end;
(c) comparing the measured temperature to the constraint temperature;
(d) if the measured temperature is less than the constraint temperature, reducing the ratio of the flow rate of liquid refrigerant to the flow rate of vapor refrigerant until the measured temperature becomes greater than the constraint temperature.

26. The method of Claim 21 wherein the predetermined value for liquid refrigerant flow rate to vapor refrigerant flow rate is determined by means of a steady state optimization calculation utilizing factors selected from the group consisting of:
(a) predetermined LNG outlet stream flow rate;
(b) natural gas feed stream conditions;
(c) quantity of refrigerant in the refrigeration cycle;
(d) composition of the mixed refrigerant;
(e) operating pressures;
(f) available power;
(g) equipment design;
(h) compressor characteristics; and
(i) ambient conditions.

27. Apparatus for controlling production of a liquefied natural gas (LNG) outlet stream (222) by refrigeration of the natural gas flowing through a liquefaction process, comprising:
measuring means (276, 278) for measuring a temperature and a flow rate of the LNG outlet stream (222); and
control means for
a) varying the refrigeration of the natural gas to adjust the temperature value of the LNG outlet stream, **characterised by**
b) control means (274) independently adjusting the rate of the LNG flowing through the process, thereby to maintain the flow rate of the LNG outlet stream (222) at a predetermined flow value and the temperature at a predetermined temperature value.

28. The apparatus of Claim 27, wherein the control means further comprises means for varying a value associated with a compressor (238) providing the refrigeration thereby to adjust the temperature value of the LNG outlet stream (222).

29. The apparatus of Claim 28, wherein the compressor (238) adjusts the flow and pressure of a refrigerant, and the value associated with the compressor (238) is at least one compressor value selected from the group consisting of speed, guidevane angle and stator blade position of the compressor (238) to adjust the operation of the closed loop refrigeration cycle, thereby to adjust the temperature value of the LNG outlet stream (222).

30. The apparatus of Claim 29, further comprising:
means for determining a corresponding target value based on constraints defining an operating range of the compressor for the at least one compressor value; and
means for adjusting the at least one compressor value to the corresponding target value, and
the varying means includes means for changing, based upon the adjustment to the at least one compressor value, at least one value associated with the recirculation of the refrigerant, thereby maintaining the flow value and temperature of the LNG outlet stream (222).

31. The apparatus of Claim 27, further comprising means for varying a mixed refrigerant (MR) value of a refrigerant providing the refrigeration, thereby to-adjust the temperature value of the LNG outlet stream (222).

32. The apparatus of claim 31, wherein:
the measuring means further comprises:
a) means (286, 278) for measuring a MR flow rate and the flow rate of the LNG outlet stream, and
b) means for forming a ratio of MR flow rate to LNG flow rate; and the control means further comprises:
means for adjusting the ratio to adjust the operation of the closed loop refrigeration cycle, thereby to adjust the temperature value of the LNG outlet stream (222).

33. The apparatus of claim 32, further comprising:
second means (294, 296) for measuring a mixed refrigerant vapor (MRV) flow rate and mixed refrigerant liquid (MRL) flow rate, and
means for:
a) adjusting the MRL flow to set the MR flow rate, and
b) subsequently adjusting the MRV flow to adjust the ratio until a valve constraint is reached; and
means for changing thereafter a value of a compressor providing the refrigeration, thereby to adjust the temperature value of the LNG outlet stream (222).

## Patentansprüche

1. Verfahren zum Kontrollieren bzw. Steuern bzw. Regeln der Produktion eines Auslassstromes (222) aus verflüssigtem Erdgas (LNG) durch Kühlung des Erdgases, das durch einen Verflüssigungsprozess strömt, mit den folgenden Schritten:
(a) Messen einer Temperatur und einer Strömungsrate des LNG-Auslassstromes (222); und
(b) Variieren der Kühlung des Erdgases zur Einstellung des Temperaturwertes des LNG-Auslassstromes (222), und unabhängig hiervon, Einstellen der Rate des LNG, das durch den Prozess strömt, wodurch die Strömungsrate des LNG-Auslassstromes (222) auf einem vorbestimmten Strömungswert und die Temperatur bei einem vorbestimmten Temperaturwert gehalten werden.

2. Verfahren nach Anspruch 1, bei dem der Schritt (b) ferner die folgenden Schritte umfasst:
Bereitstellung der Kühlung in einem geschlossenen Kühlkreis (226), in welchem ein Kompressor (238) die Strömung und den Druck eines Kühlmittels einstellt, und
Variieren mindestens eines Kompressorwertes, der aus der Gruppe mit den folgenden Elementen ausgewählt wird: Drehzahl, Führungsschaufelwinkel und Statorschaufelposition, um den Betrieb des geschlossenen Kühlkreises einzustellen, wodurch der Temperaturwert des LNG-Auslassstromes eingestellt wird.

3. Verfahren nach Anspruch 2, das ferner die folgenden Schritte aufweist:
(c) Bestimmung eines entsprechenden Zielwertes basierend auf Randbedingungen, die einen Betriebsbereich des Kompressors für den mindestens einen Kompressorwert definieren; und
(d) Einstellen mindestens eines Kompressorwertes auf den entsprechenden Zielwert, und
(e) basierend auf der Einstellung des mindestens einen Kompressorwertes, Variieren mindestens eines Wertes, welcher der Re-Zirkulation und des Kühlmittels zugeordnet ist, wodurch der Strömungswert und die Temperatur des LNG-Auslassstromes (222) beibehalten werden.

4. Verfahren nach Anspruch 3, bei dem der Schritt (d) mindestens einen Kühlwert, basierend auf einem Rückmeldungssignal variiert, welches auf mindestens einem Kompressorwert und dem entsprechendem Zielwert basiert.

5. Verfahren nach Anspruch 1, das ferner die folgenden Schritte umfasst:
Messen einer Kühlmittel-Strömungsrate und der Strömungsrate des LNG-Auslassstromes (222);
Bilden eines Verhältnisses von Kühlmittelströmungsrate zu LNG-Strömungsrate; und
Einstellen des Verhältnisses, um den Betrieb des geschlossenen Kühlkreises (226) einzustellen, um dadurch den Temperaturwert des LNG-Auslassstromes (222) einzustellen.

6. Verfahren nach Anspruch 5, bei dem das Kühlmittel teilweise kondensiert wird, um eine Kühlmittelflüssigkeit und einen Kühlmitteldampf auszubilden, und bei dem der Strömungsraten-Messschritt ferner die Messung einer Kühlmitteldampf-Strömungsrate und einer Kühlmittelflüssigkeits-Strömungsrate umfasst, und wobei der Verhältnis-Einstellungsschritt ferner das Einstellen der Kühlmitteldampf-Strömung umfasst, um die Kühlmittelströmungsrate einzustellen, und das Einstellen der Kühlmittelflüssigkeits-Strömung, um das Verhältnis einzustellen, bis ein vorbestimmtes Strömungsverhältnis erzielt ist.

7. Verfahren nach Anspruch 5, bei dem das Kühlmittel teilweise kondensiert wird, um eine Kühlmittelflüssigkeit und einen Kühlmitteldampf auszubilden, und bei dem der Strömungsraten-Messschritt ferner das Messen einer Kühlmitteldampf-Strömungsrate und einer Kühlmittelflüssigkeits-Strömungsrate umfasst, und wobei der Verhältnis-Einstellungsschritt ferner das Einstellen der Kühlmittelflüssigkeits-Strömung umfasst, um die Kühlmittelströmungsrate einzustellen, und das Einstellen der Kühlmitteldampf-Strömung, um das Verhältnis einzustellen, bis ein vorbestimmtes Strömungsverhältnis erzielt ist.

8. Verfahren nach Anspruch 1, bei dem der Prozess der Verflüssigung des Erdgases in einer Anlage durchgeführt wird, welche einen Wärmetauscher (210) mit einem warmen Ende und einem kalten Ende und einen Erdgas-Speisestromeinlass (216) an seinem warmen Ende umfasst, eine Leitung (218, 220) in dem Wärmetauscher (210) zum Kühlen und zur Verflüssigung des Erdgases durch indirekten Wärmetausch mit einem Kühlmittelstrom, der in einem separaten Kühlkreis enthalten ist, und eine Leitung (222) für verflüssigtes Erdgas, zur Übertragung des LNG-Auslassstromes an das kalte Ende des Wärmetauschers (210), wobei die Leitung eine LNG-Strömungsregelungsvorrichtung (224) aufweist; wobei der Kühlkreis einen Kompressor (238) umfasst, um das Kühlmittel zu komprimieren, einen Kondensator (242) zum Kondensieren des komprimierten Kühlmittels, eine Expansionsvorrichtung (260) zum Expandieren des kondensierten Kühlmittels und eine Einrichtung zum Einbringen des expandierten Kühlmittels in eine Verdampfungszone in dem Wärmetauscher, in welcher das expandierte Kühlmittel in indirekten Wärmetausch gebracht wird und welche Kühlung für den Erdgasstrom bereit stellt, wodurch das Erdgas verflüssigt wird, und eine Einrichtung zum Zurückführen des expandierten, verdampften Kühlmittels von dem warmen Ende zu dem Kompressor (238); und bei dem die Steuerung/Regelung der Kühlung durch eine Regelung bewirkt wird, durch das Manipulieren einer Prozessvariablen, die aus der Gruppe ausgewählt wird, die besteht aus:
dem Betrieb des Kompressors (238); und
dem Betrieb der Expansionsvorrichtung (260).

9. Verfahren nach Anspruch 8, bei dem der Kondensator (242) so funktioniert, dass er das komprimierte Kühlmittel teilweise kondensiert, um ein dampfförmiges Kühlmittel und ein flüssiges Kühlmittel zu erzeugen, und bei dem separate Expansionsvorrichtungen (260, 268) für jeweils das dampfförmige Kühlmittel und das flüssige Kühlmittel vorhanden sind, wobei jede oder beide separaten Expansionsvorrichtungen (260, 268) separat manipuliert werden.

10. Verfahren nach Anspruch 8, bei dem der Kühlmittelkompressor (238) ausgewählt wird aus der Gruppe, die besteht aus einem Zentrifugalkompressor mit Führungsschaufeln und einem Axialkompressor mit Statorschaufeln, und wobei die Strömungsrate des LNG-Auslassstromes (222) einer Regelung unterzogen wird, durch die Einstellung der LNG-Strömungsregelungsvorrichtung (224), und wobei die Temperatur des LNG-Auslassstromes (222) einer Regelung unterzogen wird, durch die Einstellung einer Kompressorvariablen, die aus der Gruppe ausgewählt wird, die besteht aus:
(a) der Drehzahl des Kühlmittelkompressors (238);
(b) dem Winkel der Führungsschaufeln; und
(c) dem Statorschaufelwinkel.

11. Verfahren nach Anspruch 10, bei dem die Kompressorvariable die Drehzahl des Kühlmittelkompressors (238) ist, und bei dem:
(a) wenn die Temperatur des LNG-Auslassstromes (222) höher ist als die vorbestimmte Temperatur, die Drehzahl des Kühlmittelkompressors (238) erhöht wird; oder
(b) wenn die Temperatur des LNG-Auslassstromes (222) niedriger ist als die vorbestimmte Temperatur, die Drehzahl des Kühlmittelkompressors (238) verringert wird.

12. Verfahren nach Anspruch 10, bei dem der Kompressor (238) ein Zentrifugalkompressor und die Kompressorvariable der Winkel der Führungsschaufeln ist, und bei dem:
(a) wenn die Temperatur des LNG-Auslassstromes (222) höher ist als die vorbestimmte Temperatur, der Winkel der Führungsschaufeln erhöht wird; oder
(b) wenn die Temperatur des LNG-Auslassstromes (222) niedriger ist als die vorbestimmte Temperatur, der Winkel der Führungsschaufeln verkleinert wird.

13. Verfahren nach Anspruch 10, bei dem der Kompressor (238) ein Axialkompressor und die Kompressorvariable der Winkel der Statorschaufeln ist, und bei dem:
(a) wenn die Temperatur des LNG-Auslassstromes (222) höher ist als die vorbestimmte Temperatur, der Winkel der Statorschaufeln erhöht wird; oder
(b) wenn die Temperatur des LNG-Auslassstromes (222) niedriger ist als die vorbestimmte Temperatur, der Winkel der Statorschaufeln verkleinert wird.

14. Verfahren nach Anspruch 10, bei dem die Strömungsrate und die Temperatur des LNG-Auslassstromes (222) simultan geregelt/gesteuert werden, durch Rückmeldung über gleichzeitige und koordinierte Einstellungen durch einen multivariablen Regler für die LNG-Strömungsregelungsvorrichtung (224) und mindestens eine der Kompressorvariablen.

15. Verfahren nach Anspruch 8, bei dem die Leitung zum Kühlen des Erdgases in dem Wärmetauscher durch mindestens eine Warmzone (212) in der Nähe des warmen Endes des Wärmetauschers (210) und mindestens eine Kaltzone (214) in der Nähe des kalten Endes des Wärmetauschers (210) hindurchgeht,
wobei die Verdampfungszone in dem Kühlkreis (226) in mindestens eine Warmzone (212) und eine Kaltzone (214) geteilt ist, die jeweils der Warmzone (212) und der Kaltzone (214) entsprechen, durch welche die Leitung hindurchgeht, mit einer separaten Expansionsvorrichtung (260, 268) zum Einbringen kondensierten Kühlmittels in sowohl die Warmzone (212) als auch die Kaltzone (214), und
wobei die Warmzonen-Expansionsvorrichtungen (268) die Strömung mindestens eines Teils des kondensierten Kühlmittels zur Warmzone (212) regelt/steuert, und die Kaltzonen-Expansionsvorrichtung (260) die Strömung mindestens eines Anteils des kondensierten Kühlmittels zur Kaltzone (214) regelt/steuert,
und ferner mit den folgenden Schritten:
(a) Ansetzen eines gewünschten Zielwertes für die Kompressorvariable;
(b) Bestimmen des aktuellen Wertes dieser Kompressorvariable;
(c) Vergleichen des gewünschten Zielwertes mit dem aktuellen Wert; und
(d) Einstellen der Warmzonen-Expansionsvorrichtung mittels einer Rückmeldungs-Steuerung/Regelung, basierend auf dem Unterschied und auf der integrierten Differenz zwischen dem gewünschten Zielwert und dem aktuellen Wert der Kompressorvariablen, um so eine Veränderung der Temperatur des LNG-Auslassstromes (222) in dieselbe Richtung zu erzielen, wie sie bei der Einstellung der Kompressorvariable erzielt wird, und
(e) Zurücksetzen der Kompressorvariable auf den gewünschten Zielwert.

16. Verfahren nach Anspruch 15, bei dem das Kühlmittel ein mehrkomponentiges Kühlmittel ist, welches teilweise kondensiert wird, um so eine Kühlmittelflüssigkeit und einen Kühlmitteldampf bereit zu stellen, wobei die Kühlmittelflüssigkeit durch die Warmzone (212) strömt und der Kühlmitteldampf durch die Kaltzone (214) und die Warmzone (212) strömt, und ferner mit den folgenden Schritten:
(a) Vorbestimmen eines gewünschten Verhältnisses von Flüssigkühlmittelströmung zu Dampfkühlmittelströmung;
(b) Messen der aktuellen Strömungsrate des flüssigen Kühlmittels;
(c) Messen der aktuellen Strömungsrate des Dampfkühlmittels;
(d) Bestimmen des aktuellen Verhältnisses von Flüssigkühlmittelströmung zu Dampfkühlmittelströmung; und
(e) Steuern/Regeln der Kaltzonen-Expansions/Strömungsregelungsvorrichtung (260), um das Verhältnis von Flüssigkühlmittelströmung zu Dampfkühlmittelströmung auf das vorbestimmte Verhältnis einzustellen.

17. Verfahren nach Anspruch 16, welches ferner eine Randbedingungs-Regelung/Steuerung für die Temperatur des Kühlmittels an der Einrichtung zum Zurückführen des expandierten, verdampften Kühlmittels vom warmen Ende des Wärmetauschers (210) zum Kompressor (238) umfasst, mit den folgenden Schritten:
(a) Vorbestimmen eines unteren Temperatur-Randbedingungswertes für das zurückkehrende Kühlmittel am warmen Ende;
(b) Messen der Temperatur des zurückkehrenden Kühlmittels am warmen Ende;
(c) Vergleichen der gemessenen Temperatur mit der Randbedingungstemperatur;
(d) wenn die gemessene Temperatur geringer ist als die Randbedingungstemperatur, Reduzieren des Verhältnisses der Flüssigkühlmittel-Strömungsrate zur Dampfkühlmittel-Strömungsrate, bis die gemessene Temperatur größer wird als die Randbedingungstemperatur.

18. Verfahren nach Anspruch 16, das ferner die Bestimmung des Kompressorablassdrucks und des Kompressorenergieverbrauchs umfasst, und welches ferner eine Randbedingungs-Steuerung/Regelung für einen Prozessparameter umfasst, der ausgewählt wird aus der Gruppe, die besteht aus:
(a) Kompressorablassdruck;
(b) Kompressorenergieverbrauch;
(c) Kaltexpansions/Strömungsregelungsvorrichtung; und
(d) Warmexpansions/Strömungsregelungsvorrichtung;
durch das Ändern des gewünschten Zielwertes für eine Kompressorvariable, die aus der folgenden Gruppe ausgewählt wird:
(a) Kompressordrehzahl;
(b) Führungsschaufelwinkel; und
(c) Statorschaufelwinkel.

19. Verfahren nach Anspruch 18, bei dem das Ansetzen des gewünschten Zielwertes mittels einer stationären Optimierungsrechnung durchgeführt wird, unter Verwendung von Faktoren, die aus der folgenden Gruppe ausgewählt werden:
(a) Vorbestimmte LNG-Auslassstrom-Strömungsrate;
(b) Erdgas-Speisestrom-Bedingungen;
(c) Menge des Kühlmittels im Kühlmittelkreis;
(d) Zusammensetzung des Mischkühlmittels;
(e) Betriebsdrücke;
(f) zur Verfügung stehende Energie;
(g) Ausgestaltung der Ausstattung;
(h) Kompressor-Kennwerte; und
(i) Umgebungsbedingungen.

20. Verfahren nach Anspruch 17, bei dem das Ansetzen des gewünschten Verhältnisses der Flüssigkühlmittel-Strömungsrate zur Dampfkühlmittel-Strömungsrate durchgerührt wird mittels einer stationären Optimierungsrechnung unter Verwendung von Faktoren, die aus der Gruppe ausgewählt werden, die besteht aus:
(a) Vorbestimmte LNG-Auslassstrom-Strömungsrate;
(b) Erdgas-Speisestrom-Bedingungen;
(c) Menge des Kühlmittels im Kühlmittelkreis;
(d) Zusammensetzung des Mischkühlmittels;
(e) Betriebsdrücke;
(f) zur Verfügung stehende Energie;
(g) Ausgestaltung der Ausstattung;
(h) Kompressor-Kennwerte; und
(i) Umgebungsbedingungen.

21. Verfahren nach Anspruch 16, bei dem:
(a) die Einstellung der Strömungsrate des LNG-Auslassstromes (222) durchgeführt wird durch eine Regelung der LNG-Strömungsregelungs-vorrichtung (224);
(b) die Einstellung der Flüssigkühlmittel-Strömungsrate auf einen bestimmten Wert durchgeführt wird durch eine Regelung der Warmzonen-Expansions/Strömungsregelungsvorrichtung;
(c) die Einstellung der Flüssigkühlmittel-Strömungsrate auf einen vorbestimmten Wert durchgeführt wird durch eine Regelung der Kaltzonen-Expansions/Strömungsregelungsvorrichtung (260);
(d) ein vorbestimmter Wert für das Verhältnis der Flüssigkühlmittel-Strömungsrate zur Dampfkühlmittel-Strömungsrate aufrecht erhalten wird durch das Einstellen des vorbestimmten Wertes für die Flüssigkühlmittel-Strömungsrate;
(e) ein vorbestimmter Wert für das Verhältnis der Gesamtkühlmittelströmung (flüssig und dampfförmig) zu LNG-Auslassstrom-Strömungsrate erzielt wird durch das Einstellen des vorbestimmten Wertes der Dampfkühlmittel-Strömungsrate; und
(f) eine Regelung/Steuerung der Temperatur des LNG-Auslassstroms (222) durchgeführt wird durch die Einstellung des vorbestimmten Wertes des Verhältnisses der Gesamtkühlmittel-Strömungsrate zur LNG-Auslassstrom-Strömungsrate.

22. Verfahren nach Anspruch 21, bei dem die Drehzahl des Kühlmittelkompressors (238) als eine Funktion der Massenströmungsrate durch den Kompressor (238) eingestellt wird, um einen maximalen Kompressorwirkungsgrad zu erzielen.

23. Verfahren nach Anspruch 21, bei dem die Führungsschaufelwinkel des Kühlmittelkompressors als eine Funktion der Massenströmungsrate durch den Kompressor (238) eingestellt werden, um einen maximalen Kompressorwirkungsgrad zu erzielen.

24. Verfahren nach Anspruch 21, bei dem die Statorschaufelwinkel des Kühlmittelkompressors als eine Funktion der Massenströmungsrate durch den Kompressor (238) eingestellt werden, um einen maximalen Kompressorwirkungsgrad zu erzeugen.

25. Verfahren nach Anspruch 21, welches ferner eine Randbedingungs-Steuerung/Regelung der Temperatur des zurückkehrenden Kühlmittels an der Einrichtung zum Zurückführen des expandierten, verdampften Kühlmittels vom warmen Ende des Wärmetauschers (210) zum Kompressor (238) umfasst mit den folgenden Schritten:
(a) Vorbestimmen eines unteren Temperatur-Randbedingungswertes für das zurückkehrende Kühlmittel am warmen Ende;
(b) Messen der Temperatur des zurückkehrenden Kühlmittels am warmen Ende;
(c) Vergleichen der gemessenen Temperatur mit der Randbedingungstemperatur;
(d) wenn die gemessene Temperatur geringer ist als die Randbedingungstemperatur, Reduzierung des Verhältnisses der Strömungsrate des Flüssigkühlmittels zur Strömungsrate des Dampfkühlmittels, bis die gemessene Temperatur größer wird als die Randbedingungstemperatur.

26. Verfahren nach Anspruch 21, bei dem der vorbestimmte Wert für die Flüssigkühlmittel-Strömungsrate zur Dampfkühlmittel-Strömungsrate bestimmt wird mittels einer stationären Optimierungsrechnung, unter Verwendung von Faktoren, die aus der folgenden Gruppe ausgewählt werden:
(a) Vorbestimmte LNG-Auslassstrom-Strömungsrate;
(b) Erdgas-Speisestrom-Bedingungen;
(c) Menge des Kühlmittels im Kühlmittelkreis;
(d) Zusammensetzung des Mischkühlmittels;
(e) Betriebsdrücke;
(f) zur Verfügung stehende Energie;
(g) Ausgestaltung der Ausstattung;
(h) Kompressor-Kennwerte; und
(i) Umgebungsbedingungen.

27. Vorrichtung zum Kontrollieren bzw. Steuern bzw. Regeln der Produktion eines verflüssigten Erdgases (LNG)-Auslassstromes (222) durch Kühlung des Erdgases, welches durch einen Verflüssigungsprozess strömt, mit:
Messeinrichtungen (276, 278) zum Messen einer Temperatur und einer Strömungsrate des LNG-Auslassstromes (222); und
Steuerungs- bzw. Regelungseinrichtungen zum
(a) Variieren der Kühlung des Erdgases, um den Temperaturwert des LNG-Auslassstromes einzustellen, **gekennzeichnet durch**:
(b) Steuerungseinrichtungen (224), die unabhängig die Rate des LNG einstellen, das **durch** den Prozess strömt, um **dadurch** die Strömungsrate des LNG-Auslassstromes (222) bei einem vorbestimmten Strömungsratenwert und die Temperatur bei einem vorbestimmten Temperaturwert zu halten.

28. Vorrichtung nach Anspruch 27, bei der die Steuerungs/Regelungs-Einrichtung ferner eine Einrichtung umfasst, um einen Wert zu variieren, der einem Kompressor (238) zugeordnet ist, welcher die Kühlung bereitstellt, um dadurch den Temperaturwert des LNG-Auslassstromes (222) einzustellen.

29. Vorrichtung nach Anspruch 28, bei der der Kompressor (238) die Strömung und den Druck eines Kühlmittels einstellt, und der Wert, welcher dem Kompressor (238) zugeordnet ist, mindestens ein Kompressorwert ist, der ausgewählt wird aus der Gruppe, die besteht aus Drehzahl, Führungsschaufelwinkel und Statorschaufelposition des Kompressors (238), um den Betrieb des geschlossenen Kühlkreises einzustellen, wodurch der Temperaturwert des LNG-Auslassstroms (222) eingestellt wird.

30. Vorrichtung nach Anspruch 29, die ferner umfasst:
eine Einrichtung zum Bestimmen eines entsprechenden Zielwertes basierend auf Randbedingungen, die einen Betriebsbereich des Kompressors für den mindestens einen Kompressorwert definieren; und
eine Einrichtung zum Einstellen des mindestens einen Kompressorwertes auf den entsprechenden Zielwert, und
wobei die Variierungseinrichtung eine Einrichtung zum Ändern mindestens eines Wertes, der der Re-Zirkulation des Kühlmittels zugeordnet ist, basierend auf der Einstellung des mindestens einen Kompressorwertes umfasst, wodurch der Strömungswert und die Temperatur des LNG-Auslassstromes (222) aufrecht erhalten werden.

31. Vorrichtung nach Anspruch 27, die ferner eine Einrichtung zum Variieren eines Mischkühlmittel(MR)-Wertes des Kühlmittels umfasst, das die Kühlung bereit stellt, um dadurch den Temperaturwert des LNG-Auslassstroms (222) einzustellen.

32. Vorrichtung nach Anspruch 31, bei der die Messeinrichtung ferner umfasst:
(a) Einrichtungen (286, 278) zum Messen einer MR-Strömungsrate und der Strömungsrate des LNG-Auslassstroms, und
(b) eine Einrichtung zum Bilden eines Verhältnisses der MR-Strömungsrate zur LNG-Strömungsrate; und wobei
die Steuerungs/Regelungseinrichtung ferner umfasst:
eine Einrichtung zum Einstellen des Verhältnisses, um den Betrieb des geschlossenen Kühlkreises einzustellen, um dadurch den Temperaturwert des LNG-Auslassstromes (222) einzustellen.

33. Vorrichtung nach Anspruch 32, die ferner umfasst:
zwei der Einrichtungen (294, 296) zum Messen einer Mischkühlmittel-Dampf(MRV)-Strömungsrate und einer Mischkühlmittel-Flüssigkeits(MRL)-Strömungsrate, und
Einrichtungen zum:
a) Einstellen der MRL-Strömung zum Einstellen der MR-Strömungsrate, und
b) danach folgenden Einstellen der MRV-Strömung zur Einstellung des Verhältnisses, bis eine Ventil-Randbedingung erreicht ist; und
c) Einrichtungen zum danach folgenden Ändern eines Wertes eines Kompressors, der die Kühlung bereitstellt, wodurch der Temperaturwert des LNG-Auslassstroms (222) eingestellt wird.

## Revendications

1. Procédé de commande de la production d'un écoulement de sortie de gaz naturel liquéfié (GNL) (222) par réfrigération du gaz naturel qui s'écoule pendant l'opération de liquéfaction, comprenant les étapes consistant à:
(a) mesurer une température et un débit de l'écoulement de sortie de GNL (222); et
(b) modifier la réfrigération du gaz naturel pour ajuster la valeur de la température de l'écoulement de sortie de GNL (222) et ajuster indépendamment le débit de GNL s'écoulant pendant l'opération, ce qui permet de maintenir le débit de l'écoulement de sortie de GNL (222) à une valeur d'écoulement prédéterminée et la température à une valeur de température prédéterminée.

2. Procédé selon la revendication 1, dans lequel l'étape b) comprend en outre les étapes consistant à:
effectuer la réfrigération dans un circuit de réfrigération en boucle fermée (226) dans lequel un compresseur (238) ajuste l'écoulement et la pression d'un réfrigérant, et
modifier au moins une valeur de compresseur choisie dans le groupe constitué de la vitesse, de l'angle des aubes directrices et de la position des aubes du stator du compresseur afin d'ajuster le fonctionnement du circuit de réfrigération en boucle fermée, ce qui permet d'ajuster la valeur de température de l'écoulement de sortie de GNL.

3. Procédé selon la revendication 2, comprenant en outre les étapes consistant à:
(c) déterminer une valeur cible correspondante basée sur des contraintes définissant une plage de fonctionnement du compresseur pour au moins une valeur de compresseur; et
(d) ajuster la valeur de compresseur au moins présente à la valeur cible correspondante, et
(e) modifier, en se basant sur l'ajustement de la valeur de compresseur au moins présente, au moins une valeur associée à la recirculation du réfrigérant, ce qui permet de maintenir la valeur d'écoulement et la température de l'écoulement de sortie de GNL (222).

4. Procédé selon la revendication 3, dans lequel l'étape d) modifie la valeur de réfrigérant au moins présente sur base d'un signal de rétroaction basé sur la valeur de compresseur au moins présente et sur la valeur cible correspondante.

5. Procédé selon la revendication 1, comprenant en outre les étapes consistant à:
mesurer un débit de réfrigérant et le débit de l'écoulement de sortie de GNL (222);
établir un rapport entre le débit de réfrigérant et le débit de GNL; et
ajuster le rapport pour ajuster le fonctionnement du circuit de réfrigération en boucle fermée (226), ce qui permet d'ajuster la valeur de température de l'écoulement de sortie de GNL (222).

6. Procédé selon la revendication 5, dans lequel le réfrigérant est partiellement condensé pour former un liquide de réfrigérant et une vapeur de réfrigérant et dans lequel l'étape de mesure du débit comprend en outre la mesure d'un débit de vapeur de réfrigérant et d'un débit de liquide de réfrigérant et l'étape d'ajustement du rapport comprend en outre l'ajustement de l'écoulement de vapeur de réfrigérant pour établir le débit de réfrigérant et l'ajustement de l'écoulement du liquide de réfrigérant pour ajuster le rapport jusqu'à obtenir un rapport d'écoulement prédéterminé.

7. Procédé selon la revendication 5, dans lequel le réfrigérant est partiellement condensé pour former un liquide de réfrigérant et une vapeur de réfrigérant et l'étape de mesure du débit comprend en outre la mesure d'un débit de vapeur de réfrigérant et d'un débit de liquide de réfrigérant, l'étape d'ajustement du rapport comprenant en outre l'ajustement de l'écoulement du liquide de réfrigérant pour établir le débit de réfrigérant et l'ajustement de l'écoulement de vapeur de réfrigérant afin d'ajuster le rapport jusqu'à obtenir un rapport d'écoulement prédéterminé.

8. Procédé selon la revendication 1 dans lequel on conduit l'opération de liquéfaction de gaz naturel dans une installation qui comprend un échangeur thermique (210) présentant une extrémité chaude et une extrémité froide et une entrée d'écoulement de l'alimentation en gaz naturel (216) située à l'extrémité chaude de cette dernière, un conduit (218, 220) situé à l'intérieur de l'échangeur thermique (210) et destiné au refroidissement et à la liquéfaction du gaz naturel par échange thermique indirect avec un écoulement de réfrigérant contenu dans un circuit de réfrigération séparé et une canalisation de gaz naturel liquéfié (222) destinée à transmettre l'écoulement de sortie de GNL à l'extrémité froide de l'échangeur thermique (210), ladite canalisation présentant un dispositif de commande d'écoulement de GNL (224); lequel circuit de réfrigération comprend un compresseur (238) pour comprimer le réfrigérant, un condenseur (242) pour condenser le réfrigérant comprimé, un dispositif de détente (260) pour détendre le réfrigérant condensé et un moyen destiné à introduire le réfrigérant détendu dans une zone d'évaporation située dans l'échangeur thermique dans laquelle le réfrigérant détendu entre en échange thermique indirect avec l'écoulement de gaz naturel et réfrigère celui-ci, ce qui permet de liquéfier le gaz naturel, et un moyen destiné à renvoyer le réfrigérant détendu évaporé de l'extrémité chaude vers le compresseur (238); et dans lequel la commande de la réfrigération est effectuée par l'intermédiaire d'une commande par rétroaction en manipulant une variable opératoire choisie dans le groupe constitué de:
fonctionnement du compresseur (238); et
fonctionnement du dispositif de détente (260).

9. Procédé selon la revendication 8, dans lequel le condenseur (242) sert à condenser partiellement le réfrigérant comprimé afin de produire un réfrigérant vaporisé et un réfrigérant liquide et tant le réfrigérant vaporisé que le réfrigérant liquide sont pourvus de dispositifs de détente séparés (260, 268), soit l'un des dispositifs de détente séparés (260, 268) soit les deux étant manipulés séparément.

10. Procédé selon la revendication 8, dans lequel le compresseur de réfrigérant (238) est choisi dans le groupe constitué d'un compresseur centrifuge présentant des aubes directrices et un compresseur axial présentant des aubes de stator, le débit de l'écoulement de sortie de GNL (222) étant asservi à une commands par rétroaction par ajustement du dispositif de commande de l'écoulement de GNL (224), la température de l'écoulement de sortie de GNL (222) étant asservie à une commande par rétroaction par ajustement d'une variable du compresseur choisie dans le groups constitué de:
(a) la vitesse du compresseur de réfrigérant (238);
(b) l'angle des aubes directrices; et
(c) l'angle des aubes du stator.

11. Procédé selon la revendication 10, dans lequel la variable du compresseur est la vitesse du compresseur de réfrigérant (238) et:
(a) si la température de l'écoulement de sortie de GNL (222) est supérieure à la température prédéterminée, on augmente la vitesse du compresseur de réfrigérant (238); ou
(b) si la température de l'écoulement de sortie de GNL (222) est inférieure à la température prédéterminée, on diminue la vitesse du compresseur de réfrigérant (238).

12. Procédé selon la revendication 10, dans lequel le compresseur (238) est un compresseur centrifuge et la variable du compresseur est l'angle des aubes directrices et:
(a) si la température de l'écoulement de sortie de GNL (222) est supérieure à la température prédéterminée, on augmente l'angle des aubes directrices; ou
(b) si la température de l'écoulement de sortie de GNL (222) est inférieure à la température prédéterminée, on diminue l'angle des aubes directrices.

13. Procédé selon la revendication 10, dans lequel le compresseur (238) est un compresseur axial et dans lequel la variable du compresseur est l'angle des aubes du stator et:
(a) si la température de l'écoulement de sortie de GNL (222) est supérieure à la température prédéterminée, on augmente l'angle des aubes du stator; ou
(b) si la température de l'écoulement de sortie de GNL (222) est inférieure à la température prédéterminée, on diminue l'angle des aubes du stator.

14. Procédé selon la revendication 10, dans lequel le débit et la température de l'écoulement de sortie de GNL (222) sont commandés simultanément par rétroaction par l'intermédiaire d'un ajustement simultané et coordonné grâce à un dispositif de commande à plusieurs variables du dispositif de commande d'écoulement de GNL (224) et d'au moins une des variables du compresseur.

15. Procédé selon la revendication 8, dans lequel le conduit de refroidissement du gaz naturel situé dans l'échangeur thermique traverse au moins une zone chaude (212) située à proximité de l'extrémité chaude de l'échangeur thermique (210) et une zone froide (214) située à proximité de l'extrémité froide de l'échangeur thermique (210),
la zone d'évaporation située dans le circuit de réfrigération (226) étant divisée en au moins une zone chaude (212) et une zone froide (214) correspondant respectivement à la zone chaude (212) et à la zone froide (214) à travers lesquelles passe le conduit, un dispositif de détente séparé (260, 268) étant destiné à introduire un réfrigérant condensé respectivement dans la zone chaude (212) et dans la zone froide (214), et
dans lequel le dispositif de détente de la zone chaude (268) commande l'écoulement d'au moins une partie du réfrigérant condensé vers la zone chaude (212) et dans lequel le dispositif de détente de la zone froide (260) commande l'écoulement d'au moins une partie du réfrigérant condensé vers la zone froide (214), et comprenant en outre les étapes consistant à:
(a) établir une valeur cible souhaitée pour la variable du compresseur;
(b) déterminer la valeur en cours d'une variable du compresseur de ce type;
(c) comparer ladite valeur cible souhaitée à la valeur courante; et
(d) ajuster le dispositif de détente de la zone chaude au moyen d'une commande par rétroaction basée sur la différence et sur la différence intégrée entre la valeur cible souhaitée et la valeur courante de la variable du compresseur afin d'effectuer un changement de température de l'écoulement de sortie de GNL (222) dans la même direction que celle effectuée par ajustement de la variable du compresseur, et
(e) réajuster la variable du compresseur à la valeur cible souhaitée.

16. Procédé selon la revendication 15, dans lequel le réfrigérant est un réfrigérant à plusieurs composants qui est partiellement condensé afin de fournir un liquide de réfrigérant et une vapeur de réfrigérant, le réfrigérant liquide s'écoulant dans la zone chaude (212) et la vapeur de réfrigérant s'écoulant dans la zone froide (214) et dans la zone chaude (212), et comprenant en outre les étapes consistant à:
(a) prédéterminer un rapport souhaité entre l'écoulement du réfrigérant liquide et l'écoulement du réfrigérant vaporisé;
(b) mesurer le débit en cours du réfrigérant liquide;
(c) mesurer le débit en cours du réfrigérant vaporisé;
(d) déterminer le rapport en cours entre l'écoulement du réfrigérant liquide et l'écoulement du réfrigérant vaporisé; et
(e) commander le dispositif de commande de détente/d'écoulement (260) de la zone froide afin d'ajuster au rapport prédéterminé le rapport entre l'écoulement de réfrigérant liquide et l'écoulement de réfrigérant vaporisé.

17. Procédé selon la revendication 16, qui comprend en outre une commande asservie de la température du réfrigérant dans le moyen destiné à renvoyer le réfrigérant détendu évaporé de l'extrémité chaude de l'échangeur thermique (210) vers le compresseur (238), comprenant les étapes consistant à:
(a) prédéterminer une valeur de consigne de basse température pour renvoyer le réfrigérant vers l'extrémité chaude;
(b) mesurer la température du réfrigérant renvoyé vers l'extrémité chaude;
(c) comparer la température mesurée à la température de consigne;
(d) si la température mesurée est inférieure é la température de consigne, le rapport entre le débit du réfrigérant liquide et le débit du réfrigérant vaporisé doit être réduit jusqu'à ce que la température mesurée devienne supérieure à la température de consigne.

18. Procédé selon la revendication 16, qui comprend en outre la détermination de la pression de décharge du compresseur et de la consommation d'énergie du compresseur et qui comprend en outre une commande asservie d'un paramètre de fonctionnement choisi dans le groupe constitué de:
(a) pression de décharge du compresseur;
(b) consommation d'énergie du compresseur;
(c) dispositif de commande de détente/d'écoulement de la zone froide; et
(d) dispositif de commande de détente/d'écoulement de la zone chaude; en modifiant la valeur cible souhaitée d'une variable du compresseur choisie dans le groupe constitué de:
(a) vitesse du compresseur;
(b) angle des aubes directrices; et
(c) angle des aubes du stator.

19. Procédé selon la revendication 18, dans lequel l'établissement de la valeur cible souhaitée est réalisé au moyen d'un calcul d'optimisation du régime permanent en utilisant des facteurs choisis dans le groupe constitué de:
(a) débit prédéterminé d'écoulement de sortie de GNL;
(b) conditions d'écoulement de l'alimentation en gaz naturel;
(c) quantité de réfrigérant dans le circuit de réfrigération;
(d) composition du réfrigérant mélangé;
(e) pressions de travail;
(f) énergie disponible;
(g) conception de l'équipement;
(h) caractéristiques du compresseur; et
(i) conditions ambiantes.

20. Procédé selon la revendication 17, dans lequel l'établissement du rapport souhaité entre le débit du liquide de réfrigérant et le débit de vapeur de réfrigérant est réalisé au moyen d'un calcul d'optimisation du régime permanent utilisant des facteurs choisis dans le groupe constitué de:
(a) débit prédéterminé d'écoulement de sortie de GNL;
(b) conditions d'écoulement de l'alimentation en gaz naturel;
(c) quantité de réfrigérant dans le circuit de réfrigération;
(d) composition du réfrigérant mélangé;
(e) pressions de travail;
(f) énergie disponible;
(g) conception de l'équipement;
(h) caractéristiques du compresseur; et
(i) conditions ambiantes.

21. Procédé selon la revendication 16, dans lequel:
(a) l'ajustement du débit de l'écoulement de sortie de GNL (222) est effectué à l'aide d'une commande par rétroaction du dispositif de commande d'écoulement de GNL (224);
(b) l'ajustement du débit du liquide de réfrigérant à une valeur prédéterminée est effectué à l'aide d'une commande par rétroaction du dispositif de commande de détente/d'écoulement situé dans la zone chaude (268);
(c) l'ajustement du débit de vapeur de réfrigérant à une valeur prédéterminée est effectué à l'aide d'une commande par rétroaction du dispositif de commande de détente/d'écoulement situé dans la zone froide (260);
(d) on maintient une valeur prédéterminée du rapport entre le débit du liquide de réfrigérant et le débit de vapeur de réfrigérant en ajustant la valeur prédéterminée du débit de liquide de réfrigérant;
(e) on atteint une valeur prédéterminée du rapport entre l'écoulement total du réfrigérant (liquide et vapeur) et le débit d'écoulement de sortie de GNL en ajustant la valeur prédéterminée du débit de vapeur de réfrigérant; et
(f) on effectue une commande de la température de l'écoulement de sortie de GNL (222) par ajustement de la valeur prédéterminée du rapport entre le débit total du réfrigérant et le débit d'écoulement de sortie de GNL.

22. Procédé selon la revendication 21, dans lequel la vitesse du compresseur de réfrigérant (238) est ajustée en fonction du débit massique dans le compresseur (238) pour atteindre un rendement maximal du compresseur.

23. Procédé selon la revendication 21, dans lequel les angles des aubes directrices du compresseur de réfrigérant sont ajustés en fonction du débit massique dans le compresseur (238) pour atteindre un rendement maximal du compresseur.

24. Procédé selon la revendication 21, dans lequel les angles des aubes du stator du compresseur de réfrigérant sont ajustés en fonction du débit massique dans le compresseur (238) pour atteindre un rendement maximal du compresseur.

25. Procédé selon la revendication 21, qui comprend en outre une commande asservie de la température du réfrigérant renvoyé dans le moyen destiné à renvoyer le réfrigérant détendu évaporé de l'extrémité chaude de l'échangeur thermique (210) vers le compresseur (238), comprenant les étapes consistant à:
(a) prédéterminer une valeur de consigne de basse température pour le réfrigérant renvoyé vers l'extrémité chaude;
(b) mesurer la température du réfrigérant renvoyé vers l'extrémité chaude;
(c) comparer la température mesurée à la température de consigne;
(d) si la température mesurée est inférieure à la température de consigne, le rapport entre le débit du réfrigérant liquide et le débit du réfrigérant vaporisé doit être réduit jusqu'à ce que la température mesurée devienne supérieure à la température de consigne.

26. Procédé selon la revendication 21, dans lequel la valeur prédéterminée entre le débit du réfrigérant liquide et le débit du réfrigérant vaporisé est déterminée au moyen d'un calcul d'optimisation de régime permanent utilisant des facteurs choisis parmi le groupe constitué de:
(a) débit prédéterminé d'écoulement de sortie de GNL;
(b) conditions d'écoulement de l'alimentation en gaz naturel;
(c) quantité de réfrigérant dans le circuit de réfrigération;
(d) composition du réfrigérant mélangé;
(e) pressions de travail;
(f) énergie disponible;
(g) conception de l'équipement;
(h) caractéristiques du compresseur; et
(i) conditions ambiantes.

27. Appareil pour commander la production d'un écoulement de sortie de gaz naturel liquéfié (GNL) (222) par réfrigération du gaz naturel s'écoulant pendant l'opération de liquéfaction, comprenant:
un moyen de mesure (276, 278) destiné à mesurer une température et un débit de l'écoulement de sortie de GNL (222); et
un moyen de commande pour
a) modifier la réfrigération du gaz naturel afin d'ajuster la valeur de température de l'écoulement de sortie de GNL, **caractérisé en ce que**:
b) un moyen de commande (274) permet d'ajuster indépendamment le débit de GNL s'écoulant pendant l'opération, ce qui permet de maintenir le débit de l'écoulement de sortie de GNL (222) à une valeur d'écoulement prédéterminée et la température à une valeur de température prédéterminée.

28. Appareil selon la revendication 27, dans lequel le moyen de commande comprend en outre un moyen destiné à modifier une valeur associée à un compresseur (238) réalisant la réfrigération, ce qui permet d'ajuster la valeur de température de l'écoulement de sortie de GNL (222).

29. Appareil selon la revendication 28, dans lequel le compresseur (238) ajuste l'écoulement et la pression d'un réfrigérant et dans lequel la valeur associée au compresseur (238) est au moins une valeur de compresseur choisie dans le groupe constitué de la vitesse, de l'angle des aubes directrices et de la position des aubes du stator du compresseur (238), afin d'ajuster le fonctionnement du circuit de réfrigération en boucle fermée, ce qui permet d'ajuster la valeur de température de l'écoulement de sortie de GNL (222).

30. Appareil selon la revendication 29, comprenant en outre:
un moyen destiné à déterminer une valeur cible correspondante basée sur des contraintes qui définissent une plage de fonctionnement du compresseur pour au moins une valeur de compresseur; et
un moyen destiné à ajuster la valeur de compresseur au moins présente à la valeur cible correspondante, et
le moyen de modification comprend un moyen destiné à modifier au moins une valeur associée à la recirculation du réfrigérant en se basant sur l'ajustement de la valeur du compresseur au moins présente, ce qui permet de maintenir la valeur d'écoulement et la température de l'écoulement de sortie de GNZ (222).

31. Appareil selon la revendication 27, comprenant en outre un moyen destiné à modifier une valeur du réfrigérant mélangé (RM) d'un réfrigérant effectuant la réfrigération, ce qui permet d'ajuster la valeur de température de l'écoulement de sortie de GNL (222).

32. Appareil selon la revendication 31, dans lequel le moyen de mesure comprend en outre:
a) un moyen (286, 278) destiné à mesurer un débit du RM et le débit de l'écoulement de sortie de GNL, et
b) un moyen destiné à établir un rapport entre le débit du RM et le débit de GNL; et
le moyen de commande comprend en outre:
un moyen destiné à ajuster le rapport pour ajuster le fonctionnement du circuit de réfrigération en boucle fermée, ce qui permet d'ajuster la valeur de température de l'écoulement de sortie de GNL (222).

33. Appareil selon la revendication 32, comprenant en outre:
un deuxième moyen (294, 296) destiné à mesurer un débit de vapeur de réfrigérant mélangé (VRM) et un débit de liquide de réfrigérant mélangé (LRM), et
un moyen destiné à:
a) ajuster l'écoulement de LRM pour établir l'écoulement de RM, et
b) ajuster ensuite l'écoulement de VRM pour ajuster le rapport jusqu'à atteindre une consigne de vanne; et
un moyen destiné à modifier ensuite une valeur d'un compresseur effectuant la réfrigération, ce qui permet d'ajuster la valeur de température de l'écoulement de sortie de GNL (222).
